(19) Europäisches Patentamt
European Patent Office
Office européen des brevets

(11) **EP 1 794 922 B1**

(12) **EUROPÄISCHE PATENTSCHRIFT**

(45) Veröffentlichungstag und Bekanntmachung des Hinweises auf die Patenterteilung:
**12.03.2008 Patentblatt 2008/11**

(21) Anmeldenummer: **05792150.4**

(22) Anmeldetag: **27.09.2005**

(51) Int Cl.:
**H04L 7/027** *(2006.01)*

(86) Internationale Anmeldenummer:
**PCT/EP2005/010436**

(87) Internationale Veröffentlichungsnummer:
**WO 2006/034846 (06.04.2006 Gazette 2006/14)**

(54) **VERFAHREN UND VORRICHTUNG ZUR TAKTSYNCHRONISIERUNG BEI EINEM OFFSET-QPSK-MODULIERTEN ÜBERTRAGUNGSSIGNAL**

METHOD AND DEVICE FOR THE CLOCK PULSE SYNCHRONISATION FOR AN OFFSET QPSK MODULATED TRANSMISSION SIGNAL

PROCEDE ET DISPOSITIF DE SYNCHRONISATION D'HORLOGE POUR UN SIGNAL DE TRANSMISSION MODULE EN QUADRATURE DE PHASE A DECALAGE

(84) Benannte Vertragsstaaten:
**DE FR GB**

(30) Priorität: **28.09.2004 DE 102004047034**
**22.12.2004 DE 102004061899**

(43) Veröffentlichungstag der Anmeldung:
**13.06.2007 Patentblatt 2007/24**

(73) Patentinhaber: **Rohde & Schwarz GmbH & Co. KG**
**81671 München (DE)**

(72) Erfinder: **SCHMIDT, Kurt**
**85567 Grafing (DE)**

(74) Vertreter: **Körfer, Thomas et al**
**Mitscherlich & Partner**
**Patent- und Rechtsanwälte**
**Postfach 33 06 09**
**80066 München (DE)**

(56) Entgegenhaltungen:
EP-A- 0 486 839        US-A- 4 313 205
US-A- 4 338 579        US-A- 5 870 443

EP 1 794 922 B1

**Beschreibung**

Die Erfindung betrifft ein Verfahren und eine Vorrichtung zur Taktsynchronisierung bei einem Offset-QPSK-modulierten Übertragungssignal.

Werden Sender und Empfänger in einem Übertragungssystem zueinander synchronisiert, so erfolgt eine sender- und empfängerseitige Angleichung des Takt- und Trägersignals jeweils hinsichtlich Phasenlage und Frequenz. Die im folgenden zu betrachtende Taktsynchronisierung erfordert eine Taktrückgewinnung im Empfänger, welche rückgekoppelt oder rückkopplungsfrei realisiert sein kann.

Bei der rückgekoppelten Taktrückgewinnung wird auf der Basis des Empfangssignals Taktphase und -frequenz geschätzt und ein Frequenzoszillator zur phasen- und frequenzsynchronen Abtastung des Empfangssignals bei den korrekten intersymbolinterferenzfreien Entscheidungszeitpunkten nachgestimmt.

Bei der rückkopplungsfreien Taktrückgewinnung wird dagegen auf der Basis des mit fester Abtastfrequenz abgetasteten Empfangssignals die Taktphase und -frequenz geschätzt und über einen Interpolator aus den Abtastwerten, welche zu den jeweiligen intersymbolinterferenzfreien Entscheidungszeitpunkten benachbart sind, der zum jeweiligen Entscheidungszeitpunkt korrekte Symbolwert des Empfangssignals ermittelt.

Für die rückkopplungsfreie Taktrückgewinnung bei fester und dem Empfänger bekannter Taktfrequenz ist aus [1]: K.Schmidt: "Digitale Taktrückgewinnung für bandbreiteneffiziente Mobilfunksysteme", 1994, ISBN 3-18-14 7510-6, ein auf der Maximuan-Likelihood-Schätzung basierendes Verfahren für Pulsamplitudenmodulierte (PAM), Quadraturphasenmodulierte (QPSX) und $\pi/4$-Quadraturphasenmodulierte ($\pi/4$-QPSK) Signale bekannt.

Die Maximum-Likelihood-Schätzung beruht dabei auf einer Maximierung der Likelihood-Funktion, welche über eine inverse Exponentialfunktion das Betragsfehlerquadrat zwischen einem gemessenen rauschbehafteten Empfangssignal und einem modellierten, ideal rauschfreien und den gesuchten Timingversatz enthaltenden Sendesignal entlang eines Beobachtungszeitraum minimiert. Der gesuchte Timingversatz ergibt sich, wenn sich bei minimalen Betragsfehlerquadrat das modellierte Sendesignal dem gemessenen Empfangssignal annähert.

Wie in [1] und weiter unten noch im Detail gezeigt wird, ergibt sich die Likelihood-Funktion aus dem mit der Impulsantwort eines signalangepaßten Vorfilters gefalteten Empfangssignal, welches nach der Vorfilterung einer nichtlinearen Funktion unterzogen wird und anschließend über eine begrenzte Anzahl von Symbolen gemittelt wird. Die nichtlineare Funktion kann, wie ebenfalls in [1] gezeigt ist, durch eine Betragsquadrierung angenähert werden. Wird der Timingversatz im Zeitbereich ermittelt, so ergibt sich der gesuchte Timingversatz aus einer Maximumdetektion des vorgefilterten, betragsquadrierten und gemittelten Empfangssignals entsprechend der Maximum-Likelihood-Funktion.

Der Nachteil der ungenauen bzw. nicht eindeutigen Maximumdetektion im Zeitbereich aufgrund ungenügender Störbeseitigung im Nutzsignal kann durch eine Betrachtung im Frequenzbereich umgangen werden. Bei einer Ermittlung des Timingversatzes im Frequenzbereich wird die Tatsache ausgenutzt, daß das vorgefilterte, betragsquadrierte und über eine begrenzte Anzahl an Symbolen gemittelte Empfangssignal über die Symbollänge eine Grundperiodizität und jeweils bei Vielfachen der Symbollänge ein Maximum aufweist. Der Timingversatz kann somit nach einer diskreten Fouriertransformation der vorgefilterten, betragsquadrierten und über eine bestimmte Anzahl an Symbolen gemittelten Empfangssignal aus der Phase der Spektrallinie bei der durch die Symbolfrequenz bestimmten Grundspektralfrequenz ermittelt werden.

Die obig skizzierte frequenzbereichsorientierte Bestimmung des Timingversatzes, die eine zu einem periodisierten Empfangssignal korrespondierende Spektrallinie voraussetzt, versagt bei einem Offset-Quadraturphasenmodulierten (OQPSK) Signal. Aufgrund der Betragsquadrierung heben sich die um eine Symbollänge phasenversetzten Inphase- und Quadraturkomponenten des vorgefilterten Offset-QPSK-Empfangsignals in ihrem Wechselanteil gegenseitig auf und führen zu einem Zeitsignal, das im wesentlichen nur noch einen Gleichanteil besitzt und somit keine den Timingversatz beinhaltende Spektrallinien aufweist.

US4338579 (Rhodes) offenbart eine Taktsynchronisierung eines FSOQ- modulierten Signals, wobei durch Nicht linearitäten Mischprodukte erzeugt werden. Nach weiterer Filterung wird der Nulldurchgang des Taktes bestimmt.

Der Erfindung liegt deshalb die Aufgabe zugrunde, für die Taktsynchronisierung eines OQPSK-Signals ein Verfahren und eine Vorrichtung zur Bestimmung des Timingversatzes im Frequenzbereich zu schaffen.

Die Aufgabe der Erfindung wird durch ein Verfahren, zur Taktsynchronisierung bei einem Offset-QPSK-Signal mit den Merkmalen des Anspruchs 1 und durch eine Vorrichtung zur Taktsynchronisierung bei einem Offset-QPSK-Signal mit den Merkmalen nach Anspruch 12 gelöst. Vorteilhafte Weiterbildungen der Erfindung sind in den abhängigen Ansprüchen aufgeführt.

Anstelle der Betragsquadrierung enthält das erfindungsgemäße Verfahren bzw. die erfindungsgemäße Vorrichtung als nichtlineare Signalverarbeitungsfunktion bzw. als nichtlineare Signalverarbeitungseinheit eine Quadrierung ohne Betragsbildung. Auf diese Weise überlagern sich die Wechselanteile der Inphase- und der Quadraturkompomente des vorgefilterten Offset-QPSK-Empfangssignals konstruktiv und führen zu Spektrallinien, die von der nachfolgenden diskreten Fouriertransformation identifiziert und einer nachfolgenden Spektralverarbeitung zur Bestimmung des Timingversatzes zugeführt werden können.

**EP 1 794 922 B1**

Die diskrete Fouriertransformation wird erfindungsgemäß am vorgefilterten, quadrierten und über eine bestimmte Anzahl von Symbolen gemittelten Empfangsignal einzig bei der positiven und negativen Symbolfrequenz ausgewertet. Die mit der Symbolfrequenz periodisch auftretenden höherwertigen Spektrallinien müssen nicht berücksichtigt werden, da bei einem Nyquistsystem mit Nichtlinearität keine weiteren Oberwellen vorhanden sind.

Die neben der Taktsynchronisierung am Empfangsignal durchzuführende Trägerfrequenzsynchronisierung kann der Taktsynchronisierung in Kaskade vor- oder nachgeschaltet sein. Wird die Trägerfrequenzsynchronisierung erfindungsgemäß der Taktsynchronisierung nachgeschaltet, so ist das vorgefilterte, quadrierte und über eine bestimmte Anzahl von Symbolen gemittelte Empfangsignal für eine korrekte Bestimmung des Timingversatzes des Taktes gegenüber einen im Empfangssignal eventuell auftretenden Trägerfrequenz- und Trägerphasenversatz zu kompensieren. Hierzu wird die Fouriertransformierte des Empfangssignals bei der positiven Symbolfrequenz konjugiert und anschließend mit der Fouriertransformierten bei der negativen Symbolfrequenz multipliziert.

Da die beim trägerfrequenzversatzfreien Empfangsignal bei der positiven und negativen Symbolfrequenz zu liegen kommenden Spektrallinien im trägerfrequenzversatzbehafteten Betriebsfall jeweils um den Trägerfrequenzversatz zur positiven bzw. negativen Symbolfrequenz frequenzverschoben sind, ist die Mittelungsfilterung in eine erste und eine zweite die erste Mittelungsfilterung nachfolgende Mittelungsfilterung aufzuteilen. Der Durchlaßberei-ch der ersten Mittelungsfilterung ist dabei so auszulegen, daß die um den Trägerfrequenzversatz gegenüber der positiven bzw. negativen Symbolfrequenz frequenzverschobene Spektrallinie von der ersten Mittelungsfilterung erfaßt wird. Die Mittenfrequenzen der als Dirac-Kamm im Zeitbereich und entsprechend als periodisch wiederholte Si-Funktionen im Frequenzbereich realisierten ersten Mittelungsfilterung liegen deshalb jeweils bei Vielfachen der Symbolfrequenz und weisen eine Bandbreite auf, die dem maximal zu erwartenden Trägerfrequenzversatz entspricht. Die für eine optimale Mittelung des vorgefilterten und quadrierten Empfangsignals erforderliche große Mittelungslänge, die entsprechend eine schmalbandige Mittelungsfilterung bedingt und somit der bandbreitenerweiterten ersten Mittelungsfilterung entgegensteht, wird durch die zweite Mittelungsfilterung verwirklicht, deren Mittelungslänge ein Vielfaches der Mittelungslänge der ersten Mittelungsfilterung ist und somit wesentlich schmalbandiger als die erste Mittelungsfilterung ausgelegt ist.

In einer ersten Ausführungsform des erfindungsgemäßen Verfahrens zur Taktsynchronisierung bei einem Offset-QPSK-Signal und der erfindungsgemäßen Vorrichtung zur Taktsynchronisierung bei einem Offset-QPSK-Signal wird die erste Mittelungsfilterung nach der Quadrierung durchgeführt, während die zweite Mittelungsfilterung im Anschluß an die der ersten Mittelungsfilterung folgenden diskreten Fouriertransformation sowie Konjugierung bzw. Multiplizierung der bei der positiven und negativen Symbolfrequenz lokalisierten Fouriertransformierten erfolgt.

Bei einer zweiten Ausführungsform des erfindungsgemäßen Verfahrens der Taktsynchronisierung bei einem Offset-QPSK-Signal und der erfindungsgemäßen Vorrichtung zur Taktsynchronisierung bei einem Offset-QPSK-Signal erfolgt die erste Mittelungsfilterung jeweils im Anschluß an die diskrete Fouriertransformation bzw. Konjugierung und die zweite Mittelungsfilterung nach Multiplizierung der beiden jeweils mit der ersten Mittelungsfilterung gemittelten und bei der positiven bzw. negativen Symbolfrequenz lokalisierten Fouriertransformierten.

Die Vorfilterung ist vorzugsweise als signalangepaßtes (matched-) Filter realisiert und bewirkt somit einem maximalen Signal-Stör-Abstand.

Die beiden Ausführungsformen des erfindungsgemäßen Verfahrens zur Taktsynchronisierung des -offset-QPSK-Signals und der erfindungsgemäßen Vorrichtung des Dffset-QPSK-Signals werden im folgenden unter Berücksichtigung der Zeichnung näher erläutert. In der Zeichnung zeigen:

Fig. 1          ein erweitertes Blockschaltbild des Übertragungssystems,

Fig. 2          ein reduziertes Blockschaltbild des Übertragungssystems,

Fig. 3          ein Blockschaltbild der Vorrichtung zur Taktsynchronisierung nach dem Stand der Technik,

Fig. 4A,4B      ein Frequenzgang des Sendefilters bei einem Roll-Off-Faktor von 1 und 0,5,

Fig. 4C,4D      ein Frequenzgang der Gesamtübertragungsstrecke bei einem Roll-Off-Faktor von 1 und 0,5,

Fig. 5          ein Blockschaltbild einer ersten Ausführungsform der erfindungsgemäßen Vorrichtung zur Taktsynchronisierung bei einem Offset-QPSK-Signal,

Fig. 6          ein Flußdiagramm einer ersten Ausführungsform des erfindungsgemäßen Verfahrens zur Taktsynchronisierung bei einem Offset-QPSK-Signal,

Fig. 7          ein Blockschaltbild einer zweiten Ausführungsform der erfindungsgemäßen Vorrichtung zur Taktsynchronisierung bei einem Offset-QPSK-Signal und

Fig. 8 ein Flußdiagramm einer zweiten Ausführungsform des erfindungsgemäßen Verfahrens zur Taktsynchronisierung bei einem Offset-QPSK-Signal.

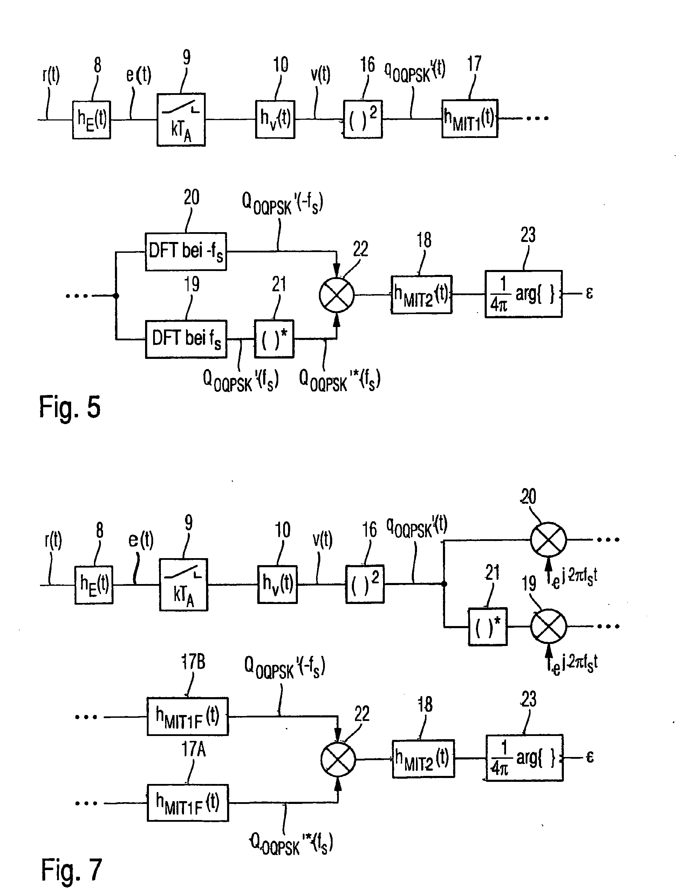

Bevor anhand der Fig. 5 bis 8 der Zeichnung die beiden Ausführungsformen des erfindungsgemäßen Verfahrens und der erfindungsgemäßen Vorrichtung zur Taktsynchronisierung bei einem Offset-QPSK-Signal im Detail beschrieben werden, erfolgt im folgenden eine Herleitung der dafür erforderlichen mathematischen Grundlagen.

Hierzu wird in einem ersten Schritt die Taktsynchronisierung mittels Maximum-Likelihood-Schätzung bei einem QPSK-Signal als Stand der Technik dargestellt, um anschließend als erfinderischen Schritt die dabei gewonnenen Erkenntnisse auf die Taktsynchronisierung bei einem Offset-QPSK-Signal zu übertragen.

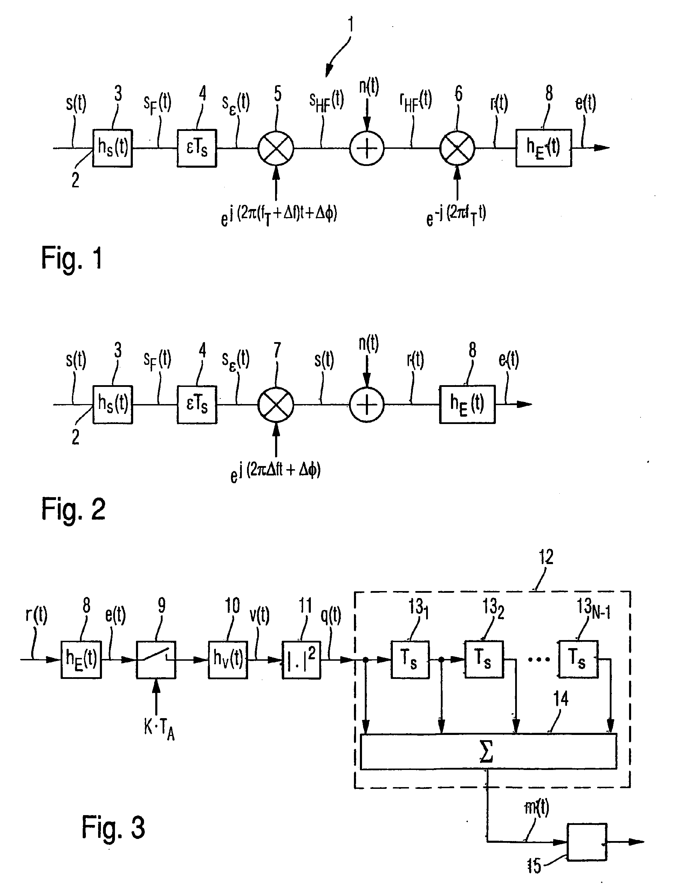

Ausgangspunkt ist ein komplexes Basisbandmodell eines Übertragungssystems 1 für zeitkontinuierliche komplexe Signale, dessen erweitertes Blockschaltbild in Fig. 1. dargestellt ist.

Am Eingang 2 des Übertragungssystems 1 wird die zu übertragende komplexe Symbolfolge s(t) eines PAM-, QPSK- oder $\pi/4$-QPSK-Signals gemäß Gleichung (1) angelegt:

$$s(t) = \sum_{n=-\infty}^{+\infty} a_R(n) \cdot \delta(t - nT_s) + j \cdot \sum_{n=-\infty}^{+\infty} a_I(n) \cdot \delta(t - nT_s) \qquad (1)$$

Hierbei stellen die $a_R(n)$ und $a_I(n)$ Symbolwerte für die zu erzeugenden Inphase- und Quadraturkomponenten des PAM-, QPSK- oder $\pi/4$-QPSK-Sendesignals dar, welche beispielsweise die reellen Werte $\{\pm s_i\}$ des Symbolalphabets annehmen können. Die Symbolfolgen der Inphase- und Quadraturkomponente sind jeweils hinsichtlich der Symbollänge $T_s$ periodisch. Systemtheoretisch wird die zu übertragende Symbolfolge s(t) im Senderfilter 3 mit dessen Impulsantwort $h_s(t)$ gefaltet und liefert die gefilterte Symbolfolge $s_F(t)$ am Ausgang des Senderfilters 3 gemäß Gleichung (2):

$$s_F(t) = \sum_{n=-\infty}^{+\infty} a_R(n) \cdot h_s(t - nT_s) + j \cdot \sum_{n=-\infty}^{+\infty} a_I(n) \cdot h_s(t - nT_s) \qquad (2)$$

Das nachfolgende Totzeitglied 4 modelliert den durch die fehlende oder ungenügende Synchronisierung zwischen Sender und Empfänger auftretenden Zeitversatz $\varepsilon \cdot T_s$, der aus einem durch das erfindungsgemäße Verfahren oder die erfindungsgemäße Vorrichtung zu ermittelnden Timingversatz $\varepsilon$ hervorgeht. Der Timingversatz $\varepsilon$ kann dabei positive und negative Werte typischerweise zwischen $\pm 0{,}5$ annehmen. Die den Zeitversatz $\varepsilon \cdot T_s$ berücksichtigende, gefilterte Symbolfolge $s_\varepsilon(t)$ am Ausgang des Totzeitglieds 4 ergibt sich somit gemäß Gleichung (3):

$$s_\varepsilon(t) = \sum_{n=-\infty}^{+\infty} a_R(n) \cdot h_s(t - \varepsilon T_s - nT_s) + j \cdot \sum_{n=-\infty}^{+\infty} a_I(n) \cdot h_s(t - \varepsilon T_s - nT_s) \qquad (3)$$

Die totzeitbehaftete, gefilterte Symbolfolge $s_\varepsilon(t)$ wird in einem Offset-QPSK-Modulator - als Multiplizierer 5 in Fig. 1 modelliert - mit einem komplexen Trägersignal $e^{j(2\pi(f_T+\Delta f)t+\Delta\varphi)}$ zu einem PAM-, QPSK- oder $\pi/4$-QPSK-modulierten Sendesignal $S_{HF}(t)$ gemischt. Das Trägersignal $e^{j(2\pi(f_T+\Delta f)t+\Delta\varphi)}$ besitzt eine Trägerfrequenz $f_T$, die aufgrund fehlender Trägerfrequenzsynchronisierung einen Frequenzversatz $\Delta f$ und Phasenversatz $\Delta\varphi$ aufweist. Ohne Berücksichtigung von Signalfehlern des Quadratur-Modulator - beispielsweise Übersprechen des Trägersignals auf den Inphase- bzw. Quadratur-Kanal, Gain-Imbalance zwischen Inphase- und Quadratur-Kanals, Quadraturfehler zwischen Inphase- zum Quadraturkanal -, ergibt sich der in Gleichung (4) dargestellte mathematische -Zusammenhang des PAM-, QPSK- oder $\pi/4$-QPSK-modulierten Sendesignal $s_{HF}(t)$ :

$$s_{HF}(t) = \left[ \sum_{n=-\infty}^{+\infty} a_R(n) \cdot h_S(t - \varepsilon T_S - n T_S) + j \cdot \sum_{n=-\infty}^{+\infty} a_I(n) \cdot h_S(t - \varepsilon T_S - n T_S) \right] \cdot e^{j(2\pi(f_T + \Delta f)t + \Delta \varphi)}$$

$$(4)$$

Auf der Übertragungsstrecke zwischen Sender und Empfänger wird dem PAM-, QPSK- oder π/4-QPSK-modulierten Sendesignal $s_{HF}(t)$ ein additives weißes Gaußverteiltes Rauschen (AWGN) n(t) additiv überlagert, das nach Gleichung (5) eine reelle und imaginäre Komponente $n_R(t)$ und $n_I(t)$ aufweist.

$$n(t) = n_R(t) + j \cdot n_I(t) \qquad (5)$$

Das im Empfänger eintreffende Empfangssignal $r_{HF}(t)$ ergibt sich folglich aus Gleichung (6):

$$r_{HF}(t) = s_{HF}(t) + n(t) \qquad (6)$$

Im Empfänger wird das mit einem Rauschen n(t) überlagerte PAM-, QPSK- oder π/4-QPSK-modulierte Empfangssignal $r_{HF}(t)$ in einem Demodulator - als Multiplizierer 6 in Fig. 1 modelliert - mit dem Trägersignal $e^{-j2\pi f_T t}$ in das Basisband heruntergemischt. Das demodulierte Empfangssignal r(t) am Ausgang des Demodulators 6, das eine mit dem Frequenz- und Phasenversatz des Trägersignals verzerrte Inphase- und Quadratur-Symbolfolge enthält, ergibt sich entsprechend Gleichung (7):

$$r(t) = s_\varepsilon(t) \cdot e^{j(2\pi\Delta f + \Delta\varphi)} + n(t)$$
$$= \left[ \sum_{n=-\infty}^{+\infty} a_R(n) \cdot h_S(t - \varepsilon T_S - n T_S) + j \cdot \sum_{n=-\infty}^{+\infty} a_I(n) \cdot h_S(t - \varepsilon T_S - n T_S) \right] \cdot e^{j(2\pi\Delta f t + \Delta\varphi)} + n(t)$$

$$(7)$$

Wie aus Gleichung (7) ersichtlich ist, heben sich die systemtheoretischen Wirkungen des Modulators 5 und des Demodulators 6 des Übertragungssystems 1 auf das PAM-, QPSK- oder π/4-QPSK-modulierte Signal teilweise auf, so daß der Modulator 5 und der Demodulator 6 in Fig. 1 durch einen einzigen Multiplizierer 7 gemäß dem reduzierten Blockschaltbild in Fig. 2 ersetzt werden kann, der die totzeitbehaftete, gefilterte Symbolfolge $s_\varepsilon(t)$ mit einem Signal $e^{j(2\pi\Delta f t + \Delta\varphi)}$ gemäß Gleichung (8) zu einem Sendesignal $s_{NF}(t)$ im Basisband mischt.

$$s_{NF}(t) = \left[ \sum_{n=-\infty}^{+\infty} a_R(n) \cdot h_S(t - \varepsilon T_S - n T_S) + j \cdot \sum_{n=-\infty}^{+\infty} a_I(n) \cdot h_S(t - \varepsilon T_S - n T_S) \right] \cdot e^{j(2\pi\Delta f t + \Delta\varphi)}$$

$$(8)$$

Das mit dem additiven weißen, gaußverteilten Rauschen n(t) additiv überlagerte Sendesignal s(t) gemäß dem reduzierten Blockschaltbild in Fig. 2 wird im Empfänger als Empfangssignal r(t) empfangen, das dem Empfangssignal gemäß Gleichung (7) des erweiterten Blockschaltbilds gemäß Fig. 1 entspricht.

Das Empfangssignal r(t) wird im Empfängerfilter 8 gemäß Gleichung (9) mit dessen Impulsantwort $h_E(t)$ gefaltet und führt am Ausgang des Empfängerfilters 8 zum Signal e(t), das eine gefilterte und bzgl. Signalfehler und Frequenz- und Phasenversatz verzerrte Inphase- und Quadratur-Symbolfolge darstellt :

$$e(t) = r(t) * h_g(t) \qquad (9)$$

Für den Fall eines PAM-, QPSK- und $\pi/4$-QPSK-Signal ist in [1] ein auf der Maximum-Likelihood-Schätzung basierendes Verfahren zur Bestimmung des Timingversatzes $\varepsilon$ bei der Taktsynchronisierung offenbart, das den Stand der Technik darstellt und für das Verständnis des erfindungsgemäßen Verfahrens und der erfindungsgemäßen Vorrichtung zur Taktsynchronisierung bei einem Offset-QPSK-Signal förderlich ist und daher im folgenden beschrieben wird.

Nach [1] wird die vom Timingversatz E und den im Betrachtungszeitraum $T_0$ übertragenen Symbolwerten $\underline{u} = [u_0,....,u_N]^T$ abhängige bedingte Likelihood-Funktion $L(\varepsilon|\underline{u})$ gemäß Gleichung (10) als über den Betrachtungszeitraum $T_0$ integrierte Betragsfehlerquadrate zwischen dem erfaßten rauschbehafteten Empfangssignal r(t) und dem mit dem gesuchten Timingversatz $\underline{\varepsilon}$ behafteten, ideal rauschfrei modellierten Sendesignal s(t) beschrieben.

$$L(\varepsilon|\underline{u}) = e^{-\frac{1}{N_0}\int_{T_0}\left|r(t)-\overline{s}(t,\underline{u},\varepsilon)\right|^2 dt} = e^{-\frac{1}{N_0}\int_{T_0}\left|r^2(t)-2r(t)\overline{s}(t,\underline{u},\varepsilon)+\overline{s}^2(t,\underline{u},\varepsilon)\right|^2 dt} \le 1 \qquad (10)$$

Die Verwendung der invertierten Exponentialfunktion sowie die Division des Arguments der Exponentialfunktion mit der Rauschleistungsdichte $N_0$ und dem Betrachtungszeitraum $T_0$ führt zu einer Normierung der bedingten Likelihood-Funktion $L(\varepsilon|\underline{u})$ auf Werte kleiner Eins. Um die Likelihood-Funktion $L(\varepsilon)$ von den im Zeitintervall $T_0$ übertragenen Symbolwerten $\underline{u}$ zu neutralisieren, wird die bedingte Likelihood-Funktion $L(\varepsilon|\underline{u})$ über den Betrachtungszeitraum $T_0$ mit der Verbund-Varteilungsdichtefunktion $p_{\underline{a}}(\underline{u})$, welche die Auftrittswahrscheinlichkeit der im zeitintervall $T_0$ übertragenen Symbolwerte $\underline{u}$ innerhalb des Symbolalphabets $\underline{a}$ beschreibt, gemäß Gleichung (11) verknüpft.

$$L(\varepsilon) = \int_{\underline{u}} L(\varepsilon|\underline{u}) \cdot p_{\underline{a}}(\underline{u}) d\underline{u} \qquad (11)$$

Die Maximum-Likelihood-Schätzung kann prinzipiell im Rahmen eines vereinfachten Modells der Taktrückgewinnung über eine begrenzte Anzahl von Symbolen in einer unendlich langen Beobachtungszeit $T_0$ oder im Rahmen eines realistischeren Modells der Taktrückgewinnung über eine unbegrenzte Anzahl von Symbolen in einer begrenzten Beobachtungszeit $T_0$ durchgeführt werden. Im folgenden wird das vereinfachte Modell dargestellt. Für diesen Fall ergibt sich für die mathematische Beziehung der bedingten Likelihood-Funktion $L(\varepsilon|\underline{u})$ in Gleichung (10) eine Integration der Betragsfehlerquadrate über einen unendlichen Integrationszeitraum gemäß Gleichung (12) :

$$L(\varepsilon|\underline{u}) = e^{-\frac{1}{N_0}\int_{-\infty}^{\infty}\left|r^2(t)-2r(t)\overline{s}(t,\underline{u},\varepsilon)+\overline{s}^2(t,\underline{u},\varepsilon)\right|^2 dt} \qquad (12)$$

Für die einzelnen Terme im Integral der bedingten Likelihood-Funktion $L(\varepsilon|\underline{u})$ der Gleichung (12) ergeben sich folgende Überlegungen:

Da der Term für das quadrierte Empfangssignal $r^2(t)$ unabhängig vom Timingversatz $\varepsilon$ ist, kann dieser Term als Konstante vor die Exponentialfunktion gezogen werden.

Für den Fall einer begrenzten Symbolanzahl N wird das modellierte Sendesignal $\overline{s}(t,\underline{u},\varepsilon)$ gemäß Gleichung (13) in Abweichung zu Gleichung (3) als ein mit der Symboldauer $T_s$ und den Symbolwerten $u_\nu$ multiplikativ verknüpfter Dirackamm beschrieben, welcher mit der Impulsantwort $h_s(t)$ des Senderfilters 3 gefaltet wird.

$$\overline{s}(t,\underline{u},\varepsilon) = \sum_{n=0}^{N-1} u_v \cdot T_S \cdot h_S(t - \varepsilon T_S - nT_S) \qquad (13)$$

Für das Integral über das quadrierte, modellierte Sendesignal $\overline{s}^2(t,\underline{u},\varepsilon)$ ergibt sich unter Berücksichtigung der in Gleichung (14) dargestellten Normierung des Senderfilters 3 der in Gleichung (15) beschriebene mathematische Zusammenhang.

$$T_S \cdot h_S(0) = \int_{-\infty}^{+\infty} T_S \cdot h_S^{2}(t)dt = 1 \qquad (14)$$

$$\int_{-\infty}^{+\infty}\overline{s}^{2}(t,\underline{u},\varepsilon)dt = \int_{-\infty}^{+\infty}\sum_{n=0}^{N-1}T_S^{2}\cdot u_v^{2}\cdot h_S^{2}(t-\varepsilon T_S - nT_S) = \sum_{n=0}^{N-1}T_S\cdot u_n^{2} \quad (15)$$

Für das Integral über dem Produkt aus Empfangssignal und modellierten Sendersignal $r(t)\cdot \overline{s}(t,\underline{u},\varepsilon)$ ergibt sich der mathematische Zusammenhang in Gleichung (16) :

$$\int_{-\infty}^{+\infty}r(t)\cdot \overline{s}(t,\underline{u},\varepsilon)dt = \int_{-\infty}^{+\infty}r(t)\cdot \sum_{n=0}^{N-1}T_S\cdot u_n\cdot h_S(t-\varepsilon T - nT_S)dt =$$

$$= \sum_{n=0}^{N-1}T_S\cdot u_n\cdot \int_{-\infty}^{+\infty}r(t)\cdot h_S(t-\varepsilon T_S - nT_S)dt =$$

$$= \sum_{n=0}^{N-1}T_S\cdot u_n\cdot \left[r(nT_S + \varepsilon T_S)*h_S(-nT_S - \varepsilon T_s)\right] = \sum_{n=0}^{N-1}T_S\cdot u_n\cdot e(nT_S + \varepsilon T_S) \qquad (16)$$

Im letzten Gleichungsschritt zu Gleichung (16) findet die mathematische Beziehung des Empfangsfilters 8 in Gleichung (9) Berücksichtigung sowie die Tatsache, was weiter unten im Detail noch gezeigt wird, daß es sich bei dem Empfangsfilter 8 um ein signalangepaßtes Filter mit der Impulsantwort $h_E(t)=h_S(-t)$ handelt.

Werden nun die obig ermittelten Erkenntnisse für die mathematischen Terme des Integrals der bedingten Likelihood-Funktion $L(\varepsilon|\underline{u})$ in Gleichung (12) berücksichtigt, so ergibt sich für die bedingte Likelihood-Funktion $L(\varepsilon|\underline{u})$ die mathematische Beziehung in Gleichung (17):

$$L(\varepsilon\mid\underline{u}) = const\cdot e^{-\frac{T}{N_0}\sum_{n=0}^{N-1}\left[u_n^{2} - 2u_n e(nT_S + \varepsilon T_S)\right]} = const\cdot \prod_{n=0}^{N-1}e^{-\frac{T_S}{N_0}\left(u_n^{2} - 2u_n e(nT_S + \varepsilon T_S)\right)} \qquad (17)$$

Wegen des statistisch unabhängigen Auftretens der einzelnen Symbole $a_n$ gilt für die Verbund-Verteilungsdichtefunktion $p_a(\underline{u})$ Gleichung (18):

$$p_{\underline{a}}(\underline{u}) = \prod_{n=0}^{N-1}p_{a_n}(u_n) \qquad (18)$$

Damit ergibt sich für die Likelihood-Funktion L($\varepsilon$) die mathematische Beziehung in Gleichung (19), die mit Einführung der Log-Likelihood-Funktion l($\varepsilon$)=ln(L($\varepsilon$)) in die korrespondierende mathematische Beziehung für die Log-Likelihood-Funktion l($\varepsilon$) in Gleichung (20) übergeht:

$$L(\varepsilon) = const \cdot \int_{-\infty}^{+\infty} \prod_{n=0}^{N-1} e^{-\frac{T_S}{N_0}\left(u_n^2 - 2u_n \varepsilon(nT_S + \varepsilon T_S)\right)} \cdot p_{a_n}(u_n) du_n \qquad (19)$$

$$l(\varepsilon) = const \cdot \sum_{n=0}^{N-1} \ln\left(\int_{-\infty}^{+\infty} e^{-\frac{T_S}{N_0}\left(u_n^2 - 2u_n \varepsilon(nT_S + \varepsilon T_S)\right)} \cdot p_{a_n}(u_n) du_n\right) \qquad (20)$$

Die Log-Likelihood-Funktion l($\varepsilon$) kann, wie Gleichung (20) zeigt, aus einer Filterung des Empfangssignals r (t) mit einem signalangepaßten Eingangsfilter - Signal e($nT_S + \varepsilon T_S$) - , einer nichtlinearen Signalverarbeitung - einer $e^{-x}$ - Funktion, Integration, Logarithmusfunktion - und einer Mittelung - Summation - interpretiert werden.

Die nichtlineare Signalverarbeitungsfunktion kann, wie in [1] gezeigt, durch eine Betragsquadrierung angenähert werden.

Somit ergibt sich das in Fig. 3 dargestellte Blockschaltbild einer Vorrichtung zur Ermittlung des Timingversatzes $\varepsilon$ in der Taktsynchronisierung eines PAM-, QPSK- und/oder $\pi$/4-QPSK-Signals auf der Basis einer Maximum-Likelihood-Schätzung, die den Stand der Technik darstellt.

Das Empfangssignal r(t) wird vom Empfangsfilter 8 mit der Impulsantwort $h_E$(t) gefiltert und liefert an seinem Ausgang das gefilterte Empfangssignal e(t). Bei dem Empfangsfilter 8 handelt es sich um ein signalangepaßtes (matched-) Filter. Ein signalangepaßtes Filter weist gemäß Gleichung (21) ein zur Impulsantwort $h_S$(t) des Senderfilters 3 korrespondierende Impulsantwort $h_E$(t) und gemäß Gleichung (22) entsprechend ein zur Übertragungsfunktion $H_S$(f) gespiegelte Übertragungsfunktion $H_E$(f) auf.

$$h_E(t) = h_S(-t) \qquad (21)$$

$$H_E(f) = H_S(-f) \qquad (22)$$

Auf diese Weise wird der Signal-Rauschabstand des gefilterten Empfangsignals e(t) als Verhältnis der Nutzleistung zur Störleistung maximiert.

Im Anschluß an das Empfangsfilter 8 erfolgt in einem Abtast- und Halteglied 9 eine Abtastung des gefilterten Empfangssignals mit einer Abtastrate $f_\lambda$, die gegenüber der Symbolfrequenz $f_S$ des Empfangssignals r(t) um den Oversamplingfaktor os erhöht ist. Der Oversamplingfaktor os muß dabei mindestens einen Wert von 8 aufweisen, da bei einem Roll-Off-Faktor r des Empfangfilters 8 von eins - r=1 - das Frequenzspektrum des gefilterten Empfangssignal e (t) Frequenzanteile kleiner bzw. gleich der Symbolfrequenz- $|f| \leq f_S$ - aufweist, durch die anschließende Betragsquadrierung, die einer Faltung im Frequenzbereich entspricht, die Bandbreite des Signals verdoppelt wird und im folgenden noch eine weitere Multiplikation des Signals erfolgt, die die Bandbreite des Signals nochmals verdoppelt.

Nach der Abtastung des gefilterten Empfangsignals e(t) erfolgt eine weitere Vorfilterung des Signals in einem Vorfilter 10. Das Vorfilter 10 hat die Aufgabe, datenabhängige Jitter im Signal zu minimieren. Hierzu werden, wie in [1] im Detail gezeigt, das Frequenzspektrum $H_E$(f) des Empfangsfilters 8 mit dem Frequenzspektrum $H_V$(f) des Vorfilters 10 gemäß Gleichung (23) zu einem gemeinsamen Frequenzspektrum $H_{EV}$(f) multiplikativ verknüpft.

$$H_{EV}(f) = H_E(f) \cdot H_V(f) \qquad (23)$$

Weist das Senderfilter 3 gemäß Gleichung (24) ein Frequenzspektrum $H_S$(f) auf, das einem Wurzel-Kosinus-Filter mit einem Roll-Off-Faktor r entspricht, so muß das gemeinsame Frequenzspektrum $H_{EV}$(f) des Empfangsfilters 8 und des Vorfilters 10, wie in [1] im Detail hergeleitet, gemäß Gleichung (25) in Abhängigkeit des Frequenzspektrum $H_s$(f) des Senderfilters 3 ausgelegt werden, um datenabhängige Jitter im Empfangssignal r(t) zu minimieren.

$$H_s(f) = \begin{cases} 1 & \text{für } |f| < \dfrac{f_s}{2} \\ \cos\left[\dfrac{\pi|f|}{2rf_s} - \dfrac{\pi(1-r)}{4r}\right] & \text{für } (1-r)\dfrac{f_s}{2} < |f| \le (1+r)\dfrac{f_s}{2} \\ 0 & \text{für } (1+r)\dfrac{f_s}{2} < |f| \end{cases} \qquad (24)$$

$$H_{EV}(f) = \begin{cases} H_s(f - f_s) + H_s(f + f_s) & \text{für } |f| \le \dfrac{f_s}{2}(1+r) \\ beliebig & \text{für } \dfrac{f_s}{2}(1+r) < |f| \le f_s \\ 0 & \text{für } f_s < |f| \end{cases} \qquad (25)$$

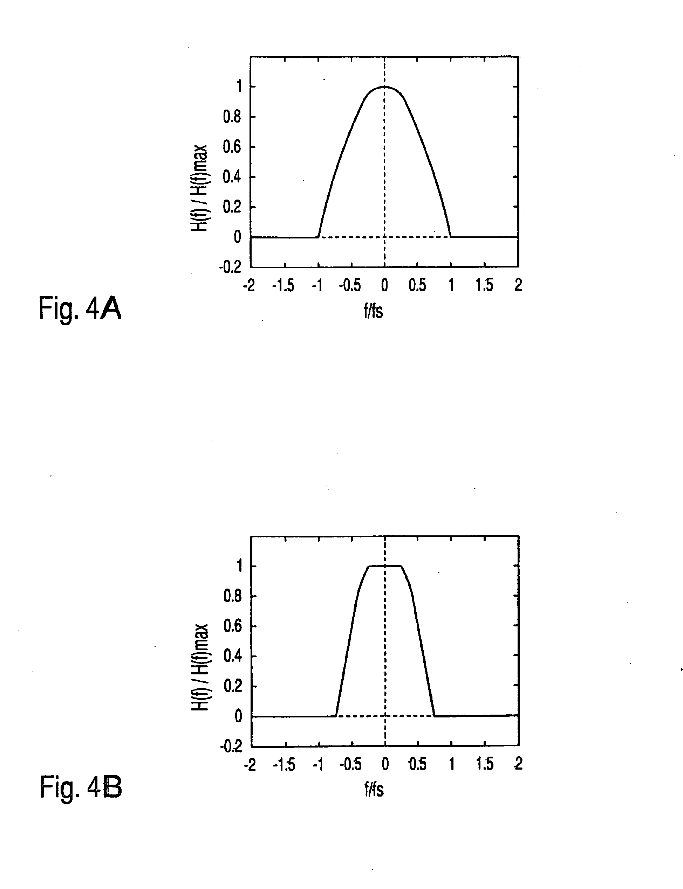

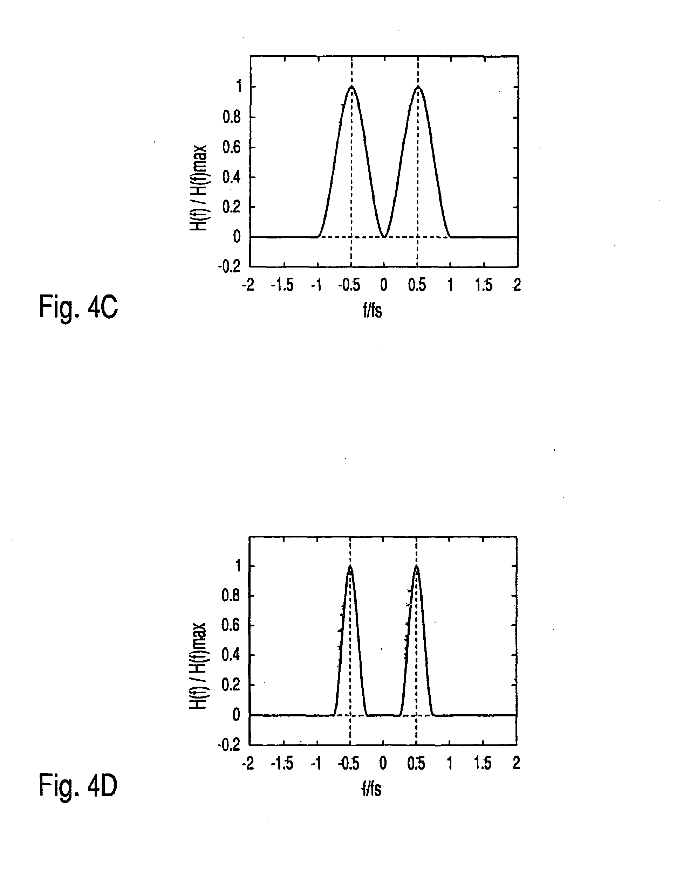

Der Frequenzgang $H_s$(f) des Senderfilters 3 ist in Fig. 4A für einen Roll-Off-Faktor r von 1 und in Fig. 4B für einen Roll-Off-Faktor r von 0,5 dargestellt. Der Frequenzgang $H_{GES}(f)=H_S(f)\cdot H_{EV}(f)$ der gesamten Übertragungssystem, bestehend aus Senderfilter 3, Empfangsfilter 8 und Vorfilter 10, ist für einen Roll-Off-Faktor r von 1 in Fig. 4C und für einen Roll-Off-Faktor r von 0,5 in Fig. 4D dargestellt.

Betrachtet man den Frequenzgang $H_{GES}$(f) in Fig. 4C bzw. in Fig. 4D, so kann dieser Frequenzgang gemäß Gleichung (26) als ein zur Frequenz f=0 symmetrisches Tiefpaßfilter $H_{GES0}$(f) mit einer Bandbreite von $\dfrac{f_s}{2}\cdot r$, das jeweils um $\pm\dfrac{f_s}{2}$ frequenzverschoben ist, interpretiert werden:

$$H_{GES}(f) = H_{GES0}(f) * \left(\delta\left(f - \frac{f_s}{2}\right) + \delta\left(f + \frac{f_s}{2}\right)\right) =$$
$$= H_{GES0}\left(f - \frac{f_s}{2}\right) + H_{GES0}\left(f + \frac{f_s}{2}\right) \qquad (26)$$

Die korrespondierende Impulsantwort $h_{GES}$(t) ergibt sich demnach gemäß Gleichung (27):

$$h_{GES}(t) = h_{GES0}(t)\cdot\left(e^{j2\pi\frac{f_s}{2}t} + e^{-j2\pi\frac{f_s}{2}t}\right) = h_{GES0}(t)\cdot\cos\left(2\pi\frac{f_s}{2}t\right) \qquad (27)$$

Das Signal v(t) am Ausgang des Vorfilters 10 kann somit gemäß Gleichung (28) dadurch gewonnen werden, daß im Sendersignal $s_{NF}$(t) im Basisband nach Gleichung (8) die Impulsantwort $h_S$(t) des Senderfilters 3 durch die Impulsantwort $h_{GES}$(t) des Gesamtübertragungssystems ersetzt wird:

$$v(t) = s_{NF}(t) * h_{GES}(t) =$$

$$\left[ \sum_{n=-\infty}^{+\infty} a_R(n) \cdot h_{GES}(t - \varepsilon T_S - nT_S) + j \cdot \sum_{n=-\infty}^{+\infty} a_I(n) \cdot h_{GES}(t - \varepsilon T_S - nT_S) \right] \cdot e^{j(2\pi\Delta ft + \Delta\varphi)}$$

$$(28)$$

Die Impulsanwort $h_{GES}(t - \varepsilon T_S - nT_S)$ kann ausgehend von -Gleichung (27) gemäß Gleichung (29) beschrieben werden:

$$h_{GES}(t - \varepsilon T_S - nT_S) = h_{GES0}(t - \varepsilon T_S - nT_S) \cdot (-1)^n \cdot \cos(2\pi \frac{f_S}{2}(t - \varepsilon T_S)) \qquad (29)$$

Mit den Zusammenfassungen in Gleichung (30) und (31) kann die mathematische Beziehung für das Signal v(t) am Ausgang des Vorfilters 10 gemäß Gleichung (32) beschrieben werden:

$$R(t) = \sum_{n=-\infty}^{+\infty} a_R(n) \cdot h_{GES0}(t - \varepsilon T_S - nT_S) \cdot (-1)^n \qquad (30)$$

$$I(t) = \sum_{n=-\infty}^{+\infty} a_I(n) \cdot h_{GES0}(t - \varepsilon T_S - nT_S) \cdot (-1)^n \qquad (31)$$

$$v(t) = \left[ R(t) + j \cdot I(t) \right] \cdot \cos(2\pi \frac{f_S}{2}(t - \varepsilon T_S)) \cdot e^{j(2\pi\Delta ft + \Delta\varphi)} \qquad (32)$$

Im Betragsquadrierer 11 werden die Inphase- und Quadraturkomponente des Signals v(t) jeweils quadriert und anschließend addiert, so daß am Ausgang des Betragsquadrierers ein Signal q(t) gemäß Gleichung (33) anliegt:

$$q(t) = \left[ R^2(t) + I^2(t) \right] \cdot \cos^2(2\pi \frac{f_S}{2}(t - \varepsilon T_S)) =$$

$$= \sum_{n=-\infty}^{+\infty} (a_R^2(n) + a_I^2(n)) \cdot h_{GES0}^2(t - \varepsilon T_S - nT_S) \cdot \cos^2(2\pi \frac{f_S}{2}(t - \varepsilon T_S)) \qquad (33)$$

Das Signal q(t) wird anschließend in einem Mittelungsfilter 12 bestehend aus insgesamt N-1 in Reihe geschalteten Zeitstufen $13_1$, $13_2$, ... , $13_{N-1}$ gemittelt, deren Ausgänge zusammen mit dem Eingang der ersten Zeitstufe $13_1$ einem Addierer 14 zur Summation der jeweils um eine unterschiedliche Anzahl m von Symbollängen $T_S$ zeitlich verzögerten Signale $q_m(t)$ zugeführt werden. Das Ausgangssignal m(t) des Mittelungsfilters 12 kann durch Faltung des Signals q(t) mit der in Gleichung (34) aufgeführten Impulsantwort $h_M(t)$ des Mittelungsfilters 12 gemäß Gleichung (35) gewonnen werden.

$$h_M(t) = \sum_{m=0}^{N-1} \delta(t - mT_S) \qquad (34)$$

$$m(t) = q(t) * h_M(t) =$$

$$= \sum_{m=0}^{N-1} \left[ R^2(t - mT_S) + I^2(t - mT_S) \right] \cdot \cos^2\left(2\pi \frac{f_s}{2}(t - \varepsilon T_S - mT_S)\right) \tag{35}$$

Schließlich erfolgt im anschließenden Maximum-Detektor 15 die Bestimmung des Maximums der gemittelten, betragsquadrierten, vorgefilterten Empfangssignals e(t), das gemäß Gleichung (20) dem Maximum der Log-Likelihood-Funktion $l(\varepsilon)$ und damit dem gesuchten Timningversatz $\varepsilon$ der Taktsynchronisierung entspricht.

Für die Taktsynchronisierung eines Offset-QPSK-Signals $s_{OQPSK}(t)$ ergibt sich in Anlehnung an Gleichung (1) für ein PAM-, QPSK- oder $\pi/4$-QPSK-Signal die mathematische Beziehung in Gleichung (36), bei der die Quadraturkomponente gegenüber der Inphase-Komponente um eine halbe Symbollänge $T_s$ phasenverschoben ist:

$$s_{OQPSK}(t) = \sum_{n=-\infty}^{+\infty} a_R(n) \cdot \delta(t - nT_S) + j \cdot \sum_{n=-\infty}^{+\infty} a_I(n) \cdot \delta\left(t - \frac{T_S}{2} - nT_S\right) \tag{36}$$

Das Offset-QPSK-modulierte Sendesignal im Basisband $s_{OQPSKNF}(t)$, in dem der Timningversatz $\varepsilon$ des Takt-signals, die Faltung mit der Impulsantwort $h_S(t)$ des Senderfilters 3 und der vorhandene Frequenz- und Phasenversatz $\Delta f$ und $\Delta \varphi$ des Trägersignals bereits Berücksichtigung findet, wird in Anlehnung an Gleichung (8) für ein PAM-, QPSK- oder $\pi/4$-QPSK-Signal durch Gleichung (37) beschrieben:

$$s_{OQPSKNF}(t) =$$

$$\left[ \sum_{n=-\infty}^{+\infty} a_R(n) \cdot h_S(t - \varepsilon T_S - nT_S) + j \cdot \sum_{n=-\infty}^{+\infty} a_I(n) \cdot h_S\left(t - \varepsilon T_S - \frac{T_S}{2} - nT_S\right) \right] \cdot e^{j(2\pi\Delta f t + \Delta\varphi)} \tag{37}$$

Das Ausgangssignal $v_{OQPSK}(t)$ des Vorfilters 10 bei Einprägung des Übertragungssystems 1 mit einem Offset-QPSK-Signals $s_{OQPSK}(t)$ entsprechend Gleichung (36) kann wiederum von der mathematischen Beziehung in Gleichung (28) für das Ausgangssignal v(t) des Vorfilters 10 im Fall eines PAM-, QPSK- oder $\pi/4$-QPSK-Signals s(t) abgeleitet werden und ist in Gleichung (38) dargestellt:

$$v_{OQPSK}(t) =$$

$$\left[ \sum_{n=-\infty}^{+\infty} a_R(n) \cdot h_{GES}(t - \varepsilon T_S - nT_S) + j \cdot \sum_{n=-\infty}^{+\infty} a_I(n) \cdot h_{GES}\left(t - \varepsilon T_S - \frac{T_S}{2} - nT_S\right) \right] \cdot e^{j(2\pi\Delta f t + \Delta\varphi)} \tag{38}$$

Für die Impulsantwort $h_{GES}\left(t - \varepsilon T_S - \frac{T_S}{2} - nT_S\right)$ kann in Analogie zur Impulsantwort $h_{GES}(t - \varepsilon T_S - nT_S)$ in Gleichung (29) die mathematische Beziehung in Gleichung (39) ermittelt werden.

$$h_{GES}\left(t - \varepsilon T_S - \frac{T_S}{2} - nT_S\right) = h_{GES0}\left(t - \varepsilon T_S - \frac{T_S}{2} - nT_S\right) \cdot (-1)^n \cdot \sin\left(2\pi \frac{f_s}{2}(t - \varepsilon T_S)\right) \tag{39}$$

Auf der Basis der mathematischen Terme in den Gleichungen (29) und (39) können die Zusammenfassungen in Gleichung (40) und (41) aufgestellt und damit der mathematische Zusammenhang für das Ausgangssignal $v_{OQPSK}$(t) des Vorfilters 10 bei Anregung des Übertragungssystems 1 mit einem Offset-QPSK-Signal $s_{OQPSK}$(t) von Gleichung (38) nach Gleichung (42) übergeführt werden.

$$R_{OQPSK}(t) = \sum_{n=-\infty}^{+\infty} a_R(n) \cdot h_{GES0}(t - \varepsilon T_S - nT_S) \cdot (-1)^n \qquad (40)$$

$$I_{OQPSK}(t) = \sum_{n=-\infty}^{+\infty} a_I(n) \cdot h_{GES0}(t - \varepsilon T_S - \frac{T_S}{2} - nT_S) \cdot (-1)^n \qquad (41)$$

$$v_{OQPSK}(t) =$$
$$\left[ R_{OQPSK}(t) \cdot \cos(2\pi \frac{f_S}{2}(t - \varepsilon T_S)) + j \cdot I_{OQPSK}(t) \cdot \sin(2\pi \frac{f_S}{2}(t - \varepsilon T_S)) \right] \cdot e^{j(2\pi\Delta ft + \Delta\varphi)}$$
$$(42)$$

Würde man im folgenden das Ausgangssignal $v_{OQPSK}$(t) des Vorfilters 10 bei Anregung des Übertragungssystems 1 mit einem Offset-QPSK-Signal $s_{OQPSK}$(t) einem Betragsquadrierer 11 zuführen, wie beim Stand der Technik für ein PAM-, QPSK- oder π/4-QPSK-Signal, so würde man ein Signal $q_{OQPSK}$(t) am Ausgang des Betragsquadrierers 11 gemäß Gleichung (43) erhalten:

$$q_{OQPSK}(t) = \left[ R_{OQPSK}^2(t) \cdot \cos^2(2\pi \frac{f_S}{2}(t - \varepsilon T_S)) + I_{OQPSK}^2(t) \cdot \sin^2(2\pi \frac{f_S}{2}(t - \varepsilon T_S)) \right] \cdot$$
$$(43)$$

Die mathematische Beziehung des Signals $q_{OQPSK}$(t) aus Gleichung (43) geht unter Berücksichtigung der Zusammenfassungen $R_{OQPSK}$(t) und $I_{OQPSK}$(t) in den Erwartungswert E{$q_{OQPSK}$(t)} des Signals $q_{OQPSK}$(t) in Gleichung (44) über. Hierbei wird die trigonometrische Beziehung $\sin(x) = \cos(x - \frac{\pi}{2})$ ) und die Tatsache ausgenutzt, daß das Symbolalphabet von Offset-QPSK-Signale nur die Werte {±1} enthält, welche über die einzelnen Abtastzeitpunkte $nT_S$ nicht zueinander korrelieren. Aufgrund der fehlenden Korrelation heben sich die einzelnen Produkte $a_R$(m·$T_S$)·$a_R$(n·$T_S$) bzw. $a_r$(m·$T_S$)·$a_I$(n·$T_S$) zu unterschiedlichen Abtastzeitpunkten m·$T_S$ bzw. n·$T_S$ gegenseitig auf, während die Produkte $a_R^2$·(m·$T_S$)·bzw $a_r^2$(n·$T_S$)·zum gleichen Abtastzeitpunkt m·$T_S$ jeweils den Wert +1 aufweisen.

$$E\{q_{OQPSK}(t)\} = \left[ \sum_{n=-\infty}^{+\infty} h_{GES0}^2(t - \varepsilon T_S - nT_S) \cdot \cos^2(2\pi \frac{f_S}{2}(t - \varepsilon T_S)) + \sum_{n=-\infty}^{+\infty} h_{GES0}^2(t - \varepsilon T_S - \frac{T_S}{2} - nT_S) \cdot \cos^2(2\pi \frac{f_S}{2}(t - \varepsilon T_S - \frac{T_S}{2})) \right] \cdot$$
$$(44)$$

Wie unschwer zu erkennen ist, kann unter Einführung einer Hilfsfunktion

$$w(t - nT_S) = h_{GES0}^2(t - \varepsilon T_S - nT_S) \cdot \cos^2(2\pi \frac{f_S}{2}(t - \varepsilon T_S))$$ die Gleichung (44) für das Signal E{$q_{OQPSK}$(t)} nach Gleichung (45) transferiert werden:

$$E\left\{q_{OQPSK}(t)\right\} = \sum_{n=-\infty}^{+\infty} w(t - nT_S) + w(t - \frac{T_S}{2} - nT_S)$$ (45)

Da für alle n die jeweilige Hilfsfunktion w(t-nT$_S$) eine auf den Bereich $n \cdot T_s - \frac{T_s}{2} \cdot \leq t - \varepsilon T_S \leq n \cdot T_s + \frac{T_s}{2}$ beschränkte und zum Zeitpunkt t-$\varepsilon T_S$=n·T$_s$ gerade Funktion ist und gleichzeitig für alle n die jeweilige Hilfsfunktion $w(t - \frac{T_s}{2} - nT_s)$ eine auf den Bereich n·T$_s$≤t-$\varepsilon T_S$≤2·n·T$_s$ beschränkte und zum Zeitpunkt $t - \varepsilon T_S = n \cdot T_s + \frac{T_s}{2}$ gerade Funktion, ergibt sich durch die Überlagerung aller Hilfsfunktionen w(t-nT$_s$) und $w(t - \frac{T_s}{2} - nT_s)$ für den Erwartungswert E{q$_{OQPSK}$(t)} des Signals q$_{OQPSK}$(t) gemäß Gleichung (46) eine konstante Funktion. Somit ist die Bestimmung des Timingversatzes $\varepsilon$ der Taktsynchronisierung eines Offset-QPSK-modulierten Signals nach dem Stand der Technik nicht möglich.

$$E\{q_{OQPSK}(t)\} = const.$$ (46)

Wird aber erfindungsgemäß anstelle einer Betragsquadrierung des Ausgangssignals v(t) des Vorfilters 10 eine reine Quadrierung ohne Betragsbildung durchgeführt, so ergibt sich ausgehend von Gleichung (42) für das Ausgangssignal q$_{OQPSK}$'(t) nach einem reinen Quadrierer 16 einer ersten Ausführungsform der erfindungsgemäßen Vorrichtung zur Taktsynchronisierung eines Offset-QPSK-modulierten Signals gemäß Fig. 5 die mathematische Beziehung in Gleichung (47):

$$q_{OQPSK}{}'(t) =$$

$$\left[\begin{array}{l} R_{OQPSK}{}^2(t) \cdot \cos^2(2\pi \frac{f_s}{2}(t - \varepsilon T_S)) - I_{OQPSK}{}^2(t) \cdot \sin^2(2\pi \frac{f_s}{2}(t - \varepsilon T_S)) + \\ j \cdot 2 \cdot R_{OQPSK}(t) \cdot I_{OQPSK}(t) \cdot \cos(2\pi \frac{f_s}{2}(t - \varepsilon T_S)) \cdot \sin(2\pi \frac{f_s}{2}(t - \varepsilon T_S)) \end{array}\right] \cdot e^{j2(2\pi\Delta ft + \Delta\varphi)}$$ (47)

Unter Anwendung der Beziehungen $\cos(x) = \frac{1}{2}(e^{jx} + e^{-jx})$ und $\sin(x) = \frac{1}{2j}(e^{jx} - e^{-jx})$ kann die mathematische Beziehung für das Signal q$_{OQPSK}$'(t) in Gleichung (47) nach Gleichung (48) übergeführt werden.

$$q_{OQPSK}{}'(t) = \left[\begin{array}{l} \frac{1}{4}(R_{OQPSK}(t) + I_{OQPSK}(t))^2 \cdot e^{j(2\pi f_s(t - \varepsilon T_s))} + \\ \frac{1}{4}(R_{OQPSK}(t) - I_{OQPSK}(t))^2 \cdot e^{-j(2\pi f_s(t - \varepsilon T_s))} + \\ \frac{1}{2}\left(R_{OQPSK}{}^2(t) - I_{OQPSK}{}^2(t)\right) \end{array}\right] \cdot e^{j2(2\pi\Delta ft + \Delta\varphi)}$$ (48)

Das Signal $q_{OQPSK}$'(t) stellt eine Überlagerung von drei periodischen, jeweils mit den Frequenz $f_s + \Delta f$, $-f_s + \Delta f$ und $\Delta f$ rotierenden Signalanteilen dar. Das Signal $q_{OQPSK}$'(t) stellt deshalb im Gegensatz zum obig diskutierten Erwartungswert $E\{q_{OQPSK}(t)\}$ des Signals $q_{OQPSK}(t)$ ein periodisches Signal dar, welche ein diskretes Spektralpaar bei $\pm f_s + 2 \cdot \Delta f$ enthält, dessen Phase ermittelbar ist und den gesuchten Timingversatz $\varepsilon$ bei der Taktsynchronisierung eines Offset-QPSK-modulierten Signals liefert.

Die mathematische Beziehung für das Signal $q_{OQPSK}$'(t) in Gleichung (48) kann unter Auflösung der Zusammenfassungen $R_{OQPSK}^2(t)$ und $I_{OQPSK}^2(t)$ weiter vereinfacht werden:

Für die Bestimmung des Erwartungswerts $E\{R_{OQPSK}^2(t)\}$ der Zusammenfassung $R_{OQPSK}^2(t)$ und analog des Erwartungswerts $E\{I_{OQPSK}^2(t)\}$ der Zusammenfassung $I_{OQPSK}^2(t)$ wird das zum Erwartungswert $E\{Roopsx2(t)\}$ der Zusammenfassung $R_{OQPSK}^2(t)$ und zum Erwartungswert $E\{I_{OQPSK}^2(t)\}$ der Zusammenfassung $I_{OQPSK}^2(t)$ gehörige Spektrum betrachtet. Näherungsweise wird für das Spektrum der jeweiligen Erwartungswerte $E\{R_{OQPSK}^2(t)\}$ und $E\{I_{OQPSK}^2(t)\}$ der jeweils zugehörige Betrag des Spektrums benutzt, der jeweils der Faltung $|H_{GES0}(f)|*|H_{GES0}(f)|$ des Betrags $|H_{GES0}(f)|$ eines zur Frequenz f=0 symmetrischen Tiefpaßfilters mit sich selbst entspricht. Aufgrund der Bandbegrezung des Tiefpaßfilters in Höhe von $\left| f \right| \leq \dfrac{f_s}{2}$ ist das Faltungsergebnis auf $|f| \leq f_s$ bandbegrenzt, so daß das Spektrum der jeweiligen Erwartungswerte $E\{R_{OQPSK}^2(t)\}$ und $E\{I_{OQPSK}^2(t)\}$ bei allen relevanten Frequenzen $\pm i \cdot f_s$ (i: ganzzahliger Faktor) mit Ausnahme des Gleichanteils (i=0) Null ist. Die korrespondierenden Erwartungswerte $E\{R_{OQPSK}^2(t)\}$ der Zusammenfassung $R_{OQPSK}^2(t)$ und $E\{I_{OQPSK}^2(t)\}$ der Zusammenfassung $I_{OQPSK}^2(t)$ ergeben sich folglich unter Berücksichtigung von Gleichung (40) bzw. (41) jeweils als konstanter Faktor $c_0$, der dem Betrag des Faltungsergebnisses $(H_{GES0}(f)*H_{GES0}(f))|_{f=0}$ bei der Frequenz Null entspricht.

Für die Erwartungswerte $E\{(R_{OQPSK}(t) + I_{OQPSK}(t))^2\}$ und $E\{(R_{OQPSK}(t) - I_{OQPSK}(t))^2\}$ ergeben sich ganz analog zur obigen Betrachtung für die Beträge der zugehörigen Spektren die beiden Faltungen $H_{GES0}'(f)*H_{GES0}'(f)$ bzw. $H_{GES0}''(f)*H_{GES0}''(f)$, welche aufgrund der Addition und Subtraktion sich von der obigen Faltung $H_{GES0}(f)*H_{GES0}(f)$ unterscheiden. Auch hier sind die Faltungen aufgrund der Quadrierung auf $|f| \leq f_s$ bandbegrenzt, so daß die Spektren der Erwartungswerte $E\{(R_{OQPSK}(t)+I_{OQPSK}(t))^2\}$ und $E\{(R_{OQPSK}(t)-I_{OQPSK}(t))^2\}$ bei den Frequenzen $\pm i \cdot f_s$ mit Ausnahme des Gleichanteils (i=0) Null sind. Die korrespondierenden Erwartungswerte $E\{(R_{OQPSK}(t)+I_{OQPSK}(t))^2\}$ und $E\{(R_{OQPSK}(t)-I_{OQPSK}(t))^2\}$ ergeben sich also als konstante Werte $c_0'$ und $c_0'$.

Somit ergibt sich ausgehend von Gleichung (48) für den Erwartungswert $E\{q_{OQPSK}'(t)\}$ des Signals $q_{OQPSK}$'(t) die mathematische Beziehung in Gleichung (49):

$$E\left\{q_{OQPSK}\,'(t)\right\} = \left[c_0\,' \cdot e^{j2\pi f_s(t - \varepsilon T_s)} + c_0\,' \cdot e^{-j2\pi f_s(t - \varepsilon T_s)}\right] \cdot e^{j2(2\pi \Delta f t + \Delta \varphi)} \qquad (49)$$

Aus Gleichung (49) ist ersichtlich, daß die Bestimmung des Timingversatzes $\varepsilon$ sich auf eine reine Phasenbetrachtung reduziert. Für die beiden Phasen $\varphi_1$ und $\varphi_2$ der beiden komplexen Signalanteile des Erwartungswertes $E\{q_{OQPSK}'(t)\}$ des Signals $q_{OQPSK}$'(t) in Gleichung (49) ergeben sich die mathematischen Beziehungen in Gleichung (50) und (51). Der Timingversatz $\varepsilon$ ergibt sich durch Subtraktion der Phasen $\varphi_1$ und $\varphi_2$ und anschließende Normierung mit dem Faktor $\dfrac{1}{4\pi}$ gemäß Gleichung (52):

$$\varphi_1 \;=\; -2\pi\varepsilon \;+2\Delta\varphi \qquad (50)$$

$$\varphi_2 \;=\; 2\pi\varepsilon \;+2\Delta\varphi \qquad (51)$$

$$\varepsilon \;=\; = \frac{1}{4\pi}(-\varphi_1 + \varphi_2) \qquad (52)$$

Auf der Basis dieser mathematischen Grundlagen wird im folgenden die erste Ausführungsform der erfindungsgemäßen Vorrichtung zur Taktsynchronisierung bei einem Offset-QPSK-Signal beschrieben. Hierbei werden für Funktionseinheiten, die sich gegenüber der Vorrichtung zur Taktsynchronisierung nach dem Stand der Technik in Fig. 3 nicht geändert haben, identische Bezugszeichen verwendet.

Die erste Ausführungsform der erfindungsgemäßen Vorrichtung zur Taktsynchronisierung bei einem Offset-QPSK-Signal in Fig. 5 filtert analog zum Stand der Technik in Fig. 3 das Empfangssignal mit einem Empfangsfilter 8 und tastet es mit einem Abtast- und Halteglied 9 mit einem Oversampling-Faktor os ab. Auch eine Vorfilterung in einem signalangepaßten Vorfilter 10 findet statt. Im Gegensatz zum Stand der Technik wird anschließend das Ausgangssignal v(t) des Vorfilters 10 mit einem Quadrierer 16 ohne Betragsbildung quadriert.

Das quadrierte und gefilterte Empfangssignal $q_{OQPSK}'(t)$ wird anschließend in Analogie zum Mittelungsfilter 12 des Stands der Technik in Fig. 3 ebenfalls gemittelt. Hierbei erfolgt erfindungsgemäß eine Aufteilung der Mittelung in eine erstes Mittelungsfilter 17 mit der Impulsantwort $h_{MIT1}(t)$ und ein im Signalpfad später nachfolgendes zweites Mittelungsfilter 18 mit der Impulsantwort $h_{MIT2}(t)$. Die Trennung der Mittelung in zwei Mittelungsschritte liegt in der Tatsache begründet, daß die beiden Spektrallinien des quadrierten, gefilterten Empfangsignals $q_{OQPSK}'(t)$, wie aus Gleichung (50) hervorgeht, gegenüber den beiden Symbolfrequenzen $\pm f_s$ um den Frequenzversatz $2\cdot\Delta f$ des Trägersignals frequenzverschoben sind. Damit diese beiden Spektrallinien des quadrierten, vorgefilterten Empfang-' signals $q_{OQPSK}'(t)$ innerhalb des Durchlaßbereiches des Mittelungsfilters liegen, muß die Bandbreite des ersten Mittelungsfilters 17 entsprechend breit ausgelegt werden.

Die Impulsantwort $h_{MIT1}(t)$ des ersten Mittelungsfilters 17 ergibt sich in Analogie zur Impulsantwort $h_M(t)$ des Mittelungsfilters des Stands der Technik gemäß Gleichung (34) aus einer Mittelung über insgesamt N Symbole. Die aufgrund obiger Überlegung erweiterte Bandbreite des ersten Mittelungsfilters 17 führt zu einer verkürzten Mittelungslänge. Um die für eine bestimmte Mittelungsgüte geforderte Mittelungslänge in der erfindungsgemäßen Vorrichtung zu erzielen, wird ein zweites Mittelungsfilter 18 eingeführt, das über ein Vielfaches der Mittelungslänge des ersten Mittelungsfilters 17 - insgesamt I.N Symbollängen - filtert.

Nach dem ersten Mittelungsfilter 17 erfolgt in einem ersten diskreten Fouriertransformator 19 die Ermittlung der Fouriertransformierten des vorgefilterten, quadrierten und gemittelten Empfangssignals bei der Frequenz $f_s$. Analog wird in einem zweiten diskreten Fouriertransformator 20 die Fouriertransformierte des vorgefilterten, quadrierten und gemittelten Empfangssignals bei der Frequenz $-f_s$ berechnet. Die Fouriertransformierten des vorgefilterten, quadrierten und gemittelten Empfangssignals bei der Frequenz $f_s$ wird einem nachfolgenden Konjugierer 21 hinsichtlich ihrer Phase konjugiert. Schließlich wird die konjugierte Fouriertransformierte des vorgefilterten, quadrierten und gemittelten Empfangssignals bei der Frequenz $f_s$ mit der Fouriertransformierte des vorgefilterten, quadrierten und gemittelten Empfangssignals bei der Frequenz $-f_s$ in einem Multiplizierer 22 multipliziert.

Dem Multiplizierer 22 folgt das obig genannte zweite Mittelungsfilter 18 mit der Impulsantwort $h_{MIT2}(t)$ gemäß Gleichung (54) nach.

$$h_{MIT2}(t) = \sum_{i=0}^{I-1} \delta(t - i \cdot N \cdot T_s) \qquad (54)$$

Das zweite Mittelungsfilter 18 dient zur weiteren Störbefreiung.

In der abschließenden Signalverarbeitungseinheit 23 erfolgt im Sinne von Gleichung (53) die Bestimmung des Timingversatzes $\varepsilon$ durch Argumentbildung - Bestimmung der Phase der miteinander multiplizierten Fouriertransformierten des vorgefilterten, quadrierten und gemittelten Empfangssignals $q_{OQPSK}'(t)$ bei den beiden Frequenzen $\pm f_s$ - und

Normierung mit dem Faktor $\dfrac{1}{4\pi}$ .

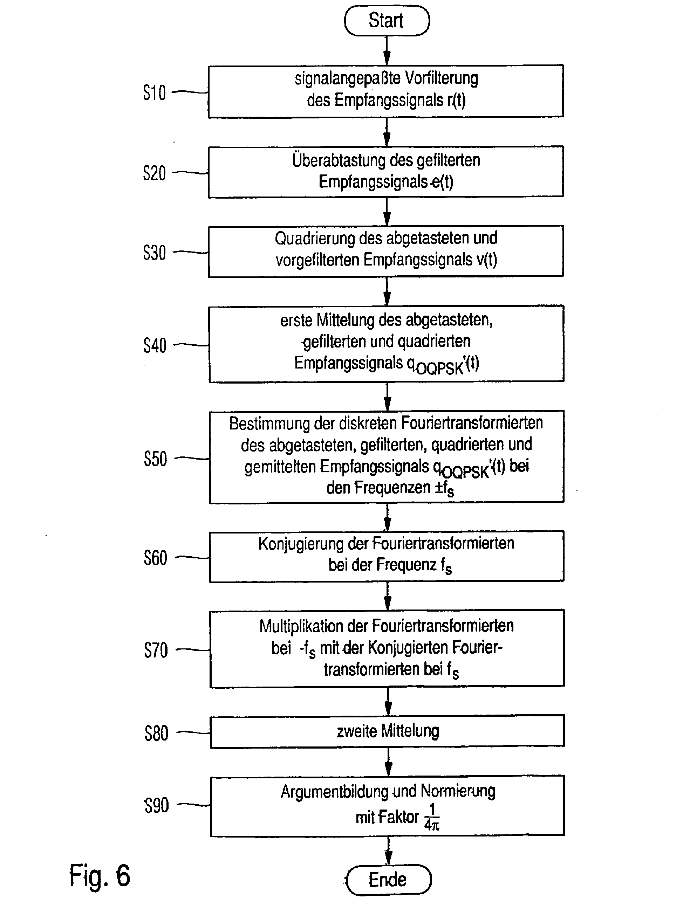

Die zugehörige erste Ausführungsform des erfindungsgemäßen Verfahrens zur Taktsynchronisierung bei einem Offset-QPSK-Signal in Fig. 6 führt in Verfahrensschritt S10 eine signalangepaßte Filterung des Empfangssignals r(t) in einem Empfangsfilter 8 gemäß Gleichung (21) und (22) und anschließende Vorfilterung in einem Vorfilter 10. Dieses Filter nach Gleichung (25) mit seinen äquidistanten Nulldurchgängen nach Gleichung (27) ist unbedingt notwendig für asymptotische (SNR=∞) fehlerfreie Schätzwerte vom Timingversatz $\varepsilon$.

Im darauffolgenden Verfahrensschritt S20 erfolgt die Überabtastung des gefilterten Empfangssignals e(t) in einem Abtast- und Halteglied 9 mit einem OversamplingFaktor os von .8, um der Nyquist-Bedingung durch die Frequenzverdopplung des Empfangssignals aufgrund Quadrierung und Multiplikation zu genügen.

Schließlich wird im nächsten Verfahrensschritt S30 das gefilterte und abgetastete Empfangssignal in einem Quadrierer 16 quadriert.

Das gefilterte, abgetastete und quadrierte Empfangssignal $q_{OQPSK}'(t)$ wird im darauffolgenden Verfahrensschritt S40 in einem ersten Mittelungsfilter 17 gemäß Gleichung (34) über insgesamt N Symbollängen gemittelt.

Der nächste Verfahrensschritt S50 beinhaltet die Bestimmung der diskreten Fouriertransformierten $Q_{OQPSK}$' (f) jeweils bei den Frequenzen $\pm f_s$ im ersten und zweiten diskreten Fouriertranformator 19 und 20.

Die Konjugierung der diskreten Fouriertransformierten $Q_{OQPSK}$'($f_s$) bei der Frequenz $f_s$ wird im nächsten Verfahrensschritt S60 in einem Konjugierer 21 durchgeführt.

Die konjugierte Fouriertransformierte $Q_{OQPSK}$'*($f_s$) bei der Frequenz $f_s$ wird mit der Fouriertransformierten $Q_{OQPSK}$'(-$f_s$) bei der Frequenz -$f_s$ im darauffolgenden Verfahrensschritt S60 in einem Multiplizierer 22 durchgeführt.

Die zweite Mittelung der beiden miteinander multiplizierten Fouriertransformierten $Q_{OQPSK}$'*($f_s$) und $Q_{OQPSK}$' (-$f_s$) über insgesamt I·N Symbollängen erfolgt im nächsten Verfahrensschritt S80 in einem zweiten Mittelungsfilter 18.

Im abschließenden Verfahrensschritt S90 wird das Argument der beiden miteinander multiplizierten und gemittelten Fourietransformierten $Q_{OQPSK}$'*($f_s$) und $Q_{OQPSK}$'(-$f_s$) ermittelt und anschließend eine Normierung mit einem Normierungsfaktor $\dfrac{1}{4\pi}$ zur Bestimmung des Timingversatzes ε durchgeführt.

In Fig. 7 ist eine zweite Ausführungsform der erfindungsgemäßen Vorrichtung zur Taktsynchronisierung bei einem Offset-QPSK-modulierten Signal dargestellt. Identische Funktionseinheiten zur ersten Ausführungsform in Fig. 5 erhalten gleiche Bezugszeichen.

Die zweite Ausführungsform der erfindungsgemäßen Vorrichtung der Taktsynchronisierung bei einem Offset-QPSK-modulierten Signal in Fig. 7 ist in seiner funktionalen Struktur im Signalpfad bis zum Quadrierer 16 identisch zur ersten Ausführungsform in Fig. 5. Anschließend wird in der zweiten Ausführungsform gegenüber der ersten Ausführungsform die Mittelung im ersten Mittelungsfilter mit der diskreten Fouriertransformation im ersten und zweiten diskreten Fouriertransformator inklusive der Konjugierung im Konjugierer miteinander vertauscht.

Somit folgt dem Quadrierer 18 ein Konjugierer 21 zur Konjugierung des gefilterten, abgetasteten und quadrierten Empfangsignals $q_{OQPSK}$'(t) sowie ein daran anschließender erster diskreter Fouriertransformator 19 zur Durchführung der diskreten Fouriertransformation am gefilterten, abgetasteten, quadrierten und konjugierten Empfangsignals $q_{OQPSK}$' (t) bei der Frequenz $f_s$ und parallel dazu ein zweiter diskreter Fouriertransformator 20 zur Durchführung der diskreten Fouriertransformation am gefilterten, abgetasteten und quadrierten Empfangsignals $q_{OQPSK}$'(t) bei der Frequenz -$f_s$.

Das erste Mittelungsfilter 17 der ersten Ausführungsform ist in der zweiten Ausführungsform jeweils als erstes Mittelungsfilter 17A und 17B dem ersten und zweiten diskreten Fouriertransformator 19 und 20 zur Durchführung der ersten Mittelung der beiden diskreten Fouriertransformierten $Q_{OQPSK}$'*($f_s$) und $Q_{OQPSK}$'(-$f_s$) nachgeschaltet.

Die weitere funktionale Struktur im Signalpfad der zweiten Ausführungsform entspricht der funktionalen Struktur der ersten Ausführungsform.

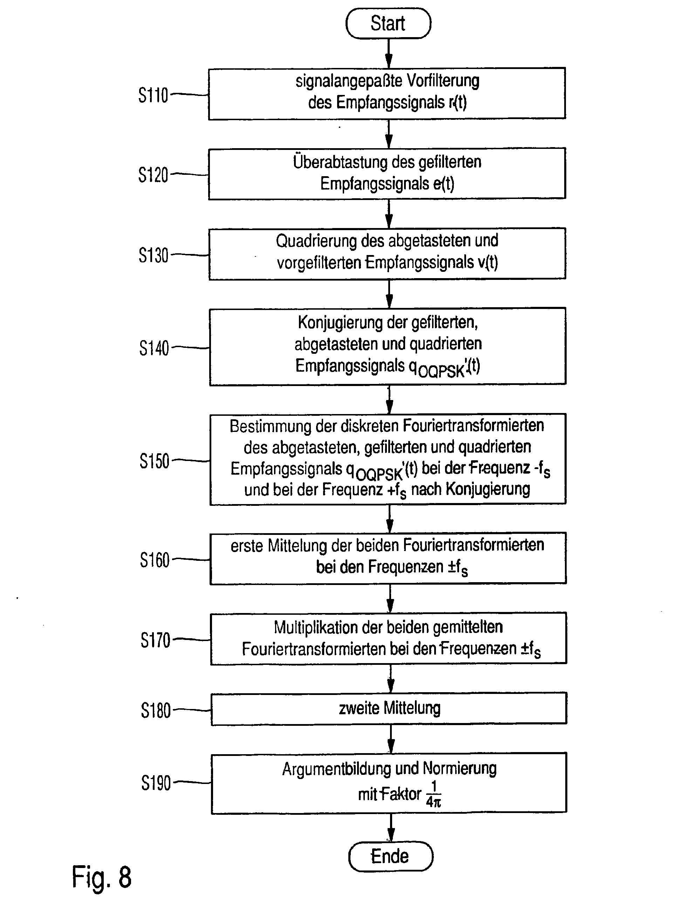

Das Flußdiagramm des zugehörigen erfindungsgemäßen Verfahrens zur Taktsynchronisierung bei einem Offset-QPSK-Signal ist in Fig. 8 abgebildet. Wie aus Fig. 8 ersichtlich ist, entsprechen die Verfahrensschritte S110 bis S130 und S170 bis S190 der zweiten Ausführungsform den korrespondierenden Verfahrensschritten S10 bis S30 und S70 bis S90 der ersten Ausführungsform in Fig. 6 und werden deshalb im folgenden nicht mehr erläutert.

In Verfahrensschritt S140 der zweiten Ausführungsform des erfindungsgemäßen Verfahrens wird in einem Konjugierer 21 das gefilterte, abgetastete und quadrierte Empfangsignal $q_{OQPSK}$'(t) konjugiert.

Im darauffolgenden Verfahrensschritt S150 wird in einem ersten und zweiten diskreten Fouriertransformator 19 und 20 die diskrete Fouriertransformierten $Q_{OQPSK}$'*($f_s$) bei der Frequenz $f_s$ und $Q_{OQPSK}$'(-$f_s$) bei der Frequenz -$f_s$ aus dem konjugierten, gefilterten, abgetasteten und quadrierten Empfangsignal $q_{OQPSK}$'(t) und dem unkonjugierten, gefilterten, abgetasteten und quadrierten Empfangsignal $q_{OQPSK}$'(t) berechnet.

Im nächsten Verfahrensschritt S160 erfolgt die erste Mittelung der beiden diskreten Fouriertransformierten $Q_{OQPSK}$'*($f_s$) bei der Frequenz $f_s$ und $Q_{OQPSK}$'(-$f_s$) bei der Frequenz -$f_s$ jeweils mit einem ersten Mittelungsfilter 17A und 17B gemäß Gleichung (34).

Die Multiplikation der gemittelten diskreten -Fouriertransformierten $Q_{OQPSK}$'*($f_s$) bei der Frequenz $f_s$ und $Q_{OQPSK}$'(-$f_s$) bei der Frequenz -$f_s$ erfolgt ganz analog wie in der ersten Ausführungsform des erfindungsgemäßen Verfahrens in Verfahrensschritt S170, so daß für die Erläuterung der weiteren Verfahrensschritte auf die bei der ersten Ausführungsform obig dargestellte Ausführung verwiesen wird.

Die Erfindung ist nicht auf die dargestellten Ausführungsformen beschränkt. Insbesondere seien fortgeschrittene zeitbereichsorientierte Bestimmungsverfahren für den Timingversatz ε der Taktsynchronisierung eines Offset-QPSK-modulierten Signals, welche den obig dargestellten Erfindungsgedanken beinhalten, von der Erfindung abgedeckt.

**Patentansprüche**

1. Verfahren zur Taktsynchronisierung zwischen einem amplituden- oder phasenmodulierten Empfangsignal (r(t)) und einem Sendesignal (s(t)) mittels Schätzung des Timingversatzes (ε) zwischen Empfangssignal (r(t)) und Sendesignal (s(t)) durch Maximum-Likelihood-Schätzung, wobei die Maximum-Likelihood-Schätzung durch eine von der Übertragungscharakteristik abhängige Vorfilterung (S10;S110), eine nachfolgende nichtlineare Signalverarbeitungsfunktion (S30, S130) und eine Mittelungsfilterung (S40,S80;S160,S180) realisiert ist,
**dadurch gekennzeichnet,**
**daß** das Empfangssignal (r(t)) ein Offset-Quadraturphasenmoduliertes Empfangsignals ist und die nichtlineare Signalverarbeitungsfunktion (S30, S130) die Wechselanteile im Spektrum des vorgefilterten Offset-Quadraturphasenmodulierten Empfangsignals (v(t)) aufrechterhält.

2. Verfahren zur Taktsynchronisierung nach Anspruch 1,
**dadurch gekennzeichnet,**
**daß** die nichtlineare Signalverarbeitungsfunktion (S30, S130) eine Quadrierung ohne Betragsbildung (S30, S130) ist.

3. Verfahren zur Taktsynchronisierung nach Anspruch 2,
**dadurch gekennzeichnet,**
**daß** die Quadrierung ohne Betragsbildung (S30, S130) eine den Wechselanteil im Spektrum des vorgefilterten Offset-Quadraturphasenmodulierten Empfangsignals (v(t)) aufrechterhaltende Überlagerung des quadrierten Real- und Imaginärteils des vorgefilterten Offset-Quadraturphasenmodulierten Empfangsignals (v(t)) realisiert.

4. Verfahren zur Taktsynchronisierung nach einem der Ansprüche 1 bis 3,
**dadurch gekennzeichnet,**
**daß** jeweils eine Fouriertransformierte ($Q_{OQPSK}$'(f)) des vorgefilterten und quadrierten Offset-Quadraturphasenmodulierten Empfangsignals ($q_{OQPSK}$'(t)) bei der positiven und negativen Symbolfrequenz ($\pm f_s$) bestimmt wird (S50; S150).

5. Verfahren zur Taktsynchronisierung nach Anspruch 4,
**dadurch gekennzeichnet,**
**daß** die Fouriertransformierte ($Q_{OQPSK}$'($f_s$))des vorgefilterten und quadrierten Offset-Quadraturphasenmodulierten Empfangsignals ($q_{OQPSK}$'(t)) bei der positiven Symbolfrequenz ($f_s$) konjugiert wird (S60;S140) und anschließend mit der Fouriertransformierten ($Q_{OQPSK}$'(-$f_s$)) des vorgefilterten und quadrierten Offset-Quadraturphasenmodulierten Empfangsignals ($q_{OQPSK}$'(t)) bei der negativen Symbolfrequenz (-$f_s$) multipliziert wird (S70;S170).

6. Verfahren zur Taktsynchronisierung nach einem der Ansprüche 1 bis 5,
**dadurch gekennzeichnet,**
**daß** die Mittelungsfilterung (S40,S80;S160,S180) aus einer ersten Mittelungsfilterung (S40;S160) und einer zweiten Mittelungsfilterung besteht (S80;S180).

7. Verfahren zur Taktsynchronisierung nach Anspruch 6,
**dadurch gekennzeichnet,**
**daß** die Bandbreite der ersten Mittelungsfilterung (S40;S160) soweit erhöht wird, bis die jeweils um den Frequenzversatz (2·Δf) der Trägerfrequenz gegenüber der positiven und negativen Symbolfrequenz ($\pm f_s$) verschobene Spektrallinie des vorgefilterten und quadrierten Offset-Quadraturphasenmodulierten Empfangsignals ($q_{OQPSK}$'(t)) innerhalb des Durchlaßbereiches der ersten Mittelungsfilterung (S40;S160) zu liegen kommt.

8. Verfahren zur Taktsynchronisierung nach Anspruch 6 oder 7,
**dadurch gekennzeichnet,**
**daß** die erste Mittelungsfilterung (S40) vor der Bestimmung der beiden Fouriertransformierten (S5d) durchgeführt wird.

9. Verfahren zur Taktsynchronisierung nach Anspruch 6 oder 7,
**dadurch gekennzeichnet,**
**daß** die erste Mittelungsfilterung (S160) jeweils nach der Bestimmung der beiden Fouriertransformierten (S150) durchgeführt wird.

10. Verfahren zur Taktsynchronisierung nach einem der Ansprüche 6 bis 9,
**dadurch gekennzeichnet,**
**daß** die Dauer der Impulsantwort der zweiten Mittelungsfilterung (S80;S180) soweit erhöht wird, bis die durch die erhöhten Bandbreite reduzierte Dauer der Impulsantwort der ersten Mittelungsfilterung (S40;S160) in Kombination mit der Dauer der Impulsantwort der zweiten Mittelungsfilterung (80;S180) eine Gesamtdauer ergibt, die für die Glättung von dem vorgefilterten und quadrierten Offset-Quadraturphasenmodulierten Empfangsignal $q_{OQPSK}'(t)$ überlagerten Störungen erforderlich ist.

**11.** Verfahren zur Taktsynchronisierung nach einem der Ansprüche 6 bis 10,
**dadurch gekennzeichnet,**
**daß** die zweite Mittelungsfilterung (s80;S180) nach Multiplikation (S70;S170) der konjugierten Fouriertransformierten ($Q_{OQPSK}'^*(f_s)$) bei der positiven Symbolfrequenz ($f_s$) mit der Fouriertransformierten ($Q_{OQPSK}'(-f_s)$) bei der negativen Symbolfrequenz ($-f_s$) durchgeführt wird.

**12.** Vorrichtung zur Taktsynchronisierung zwischen einem amplituden- oder phasenmodulierten Empfangssignal ($r(t)$) und einem Sendersignal ($s(t)$) durch Schätzung des Timingversatzes ($\varepsilon$) zwischen Empfangssignal ($r(t)$) und Sendersignal ($s(t)$) mittels eines Maximum-Likelihood-Schätzers, wobei der Maximum-Likelihood-Schätzer aus einem von der Übertragungscharakteristik abhängigen Vorfilter (8, 10), einer nachfolgenden nichtlinearen Signalverarbeitungseinheit (16) und einem Mittelungsfilter (17,17A,17B,18) besteht,
**dadurch gekennzeichnet,**
**daß** das Empfangssignal ($r(t)$) ein Offset-Quadraturphasenmoduliertes Empfangsignals ist und die nichtlineare Signalverarbeitungseinheit (16) ein Quadrierer ohne Betragsbildner (16) ist.

**13.** Vorrichtung zur Taktsynchronisierung nach Anspruch 12,
**dadurch gekennzeichnet,**
**daß** das Mittelungsfilter (17,17A,17B,18) aus einem ersten Mittelungsfilter (17,17A,17B) und einem nachgeschalteten zweiten Mittelungsfilter (18) besteht.

**14.** Vorrichtung zur Taktsynchronisierung nach Anspruch 13,
**dadurch gekennzeichnet,**
**daß** zwischen dem Quadrierer (16) und dem zweiten Mittelungsfilter (18) jeweils ein erster und zweiter diskreter Fouriertransformator (19, 20) zur Durchführung der Fouriertransformation bei der positiven und negativen Symbolfrequenz ($+f_s,-f_s$) geschaltet ist.

**15.** Vorrichtung zur Taktsynchronisierung nach Anspruch 14,
**dadurch gekennzeichnet,**
**daß** dem ersten diskreten Fouriertransformator (19) zur Durchführung der Fouriertransformation bei der positiven Symbolfrequenz ($+f_s$) ein Konjugierer (21) vor- oder nachgeschaltet ist.

**16.** Vorrichtung zur Taktsynchronisierung nach Anspruch 14 oder 15,
**dadurch gekennzeichnet,**
**daß** das erste Mittelungsfilter (17) dem ersten und zweiten diskreten Fouriertransformatoren (19, 21) vorgeschaltet ist.

**17.** Vorrichtung zur Taktsynchronisierung nach Anspruch 14 oder 15,
**dadurch gekennzeichnet,**
**daß** jeweils ein erstes Mittelungsfilter (17A, 17B) dem ersten und zweiten diskreten Fouriertransformator (19,20) nachgeschaltet ist.

**18.** Vorrichtung zur Taktsynchronisierung nach Anspruch 16 oder 17,
**dadurch gekennzeichnet,**
**daß** ein Multiplizierer (22) dem ersten und zweiten diskreten Fouriertransformator (19, 20) oder den beiden ersten Mittelungsfiltern (17A, 17B) zur Multiplikation der konjugierten Fouriertransformierten ($Q_{OQPSK}'^*(f_s)$) des vorgefilterten und quadrierten Offset-Quadraturphasemodulierten Empfangsignals ($q_{OQPSK}'(t)$) bei der positiven Symbolfrequenz ($+f_s$) mit der Fouriertransformierten ($Q_{OQPSK}'(-f_s)$) des vorgefilterten und quadrierten -Offset-Quadraturphasenmodulierten Empfangsignals ($q_{OQPSK}'(t)$) bei der negativen Symbolfrequenz ($-f_s$) nachgeschaltet ist.

**19.** Digitales Speichermedium mit elektronisch auslesbaren Steuersignalen, die so mit einem programmierbaren Computer oder digitalen Signalprozessor zusammenwirken können, daß das Verfahren nach einem der Ansprüche 1 bis 11 ausgeführt wird.

**20.** Computerprogramm-Produkt mit auf einem maschinenlesbaren Träger gespeicherten Programmcode-Mitteln, um alle Schritte gemäß einem der Ansprüche 1 bis 11 durchführen zu können, wenn das Programm auf einem Computer oder einem digitalen Signalpr-ozessor ausgeführt wird.

21. Computerprogramm mit Programmcode-Mitteln, um alle Schritte gemäß einem der Ansprüche 1 bis 11 durchführen zu können, wenn das Programm auf einem Computer oder einem digitalen Signalprozessor ausgeführt wird.

22. Computerprogramm mit Programmcode-Mitteln, um alle Schritte gemäß einem der Ansprüche 1 bis 11 durchführen zu können, wenn das Programm auf einem maschinenlesbaren Datenträger gespeichert ist.

**Claims**

1. Method for clock-pulse synchronisation between an amplitude-modulated or phase-modulated received signal (r(t)) and a transmitted signal (s(t)) by estimating the timing offset ($\varepsilon$) between the received signal (r(t)) and the transmitted signal (s(t)) by maximum-likelihood estimation, wherein the maximum-likelihood estimation is realised through a prefiltering dependent upon the transmission characteristic (S10;S110), a subsequent nonlinear signal-processing function (S30, S130) and an averaging filtering (540, S80; S160, S180),
   **characterised in that**
   the received signal (r(t)) is an offset quadrature-phase-modulated received signal, and the nonlinear signal-processing function (S30, S130) maintains the alternating components in the spectrum of the pre-filtered offset quadrature-phase-modulated received signal (v(t)).

2. Method for clock-pulse synchronisation according to claim 1,
   **characterised in that**
   the nonlinear signal-processing function (S30, S130) is a squaring without modulus-formation (S30, S130).

3. Method for clock-pulse synchronisation according to claim 2,
   **characterised in that**
   the squaring without modulus-formation (S30, S130) realises a superposition of the squared real and imaginary component of the pre-filtered offset quadrature-phase-modulated received signal (v(t)) maintaining the alternating component in the spectrum of the pre-filtered offset quadrature-phase-modulated received signal (v(t)).

4. Method for clock-pulse synchronisation according to any one of claims 1 to 3,
   **characterised in that**
   a Fourier-transform ($Q_{OQPSK}$'(f)) of the pre-filtered and squared offset quadrature-phase-modulated received signal ($q_{OQPSK}$' (t)) is determined respectively at the positive and negative symbol frequency ($\pm f_s$) (S50; S150).

5. Method for clock-pulse synchronisation according to claim 4,
   **characterised in that**
   the Fourier transform ($Q_{OQPSK}$'(f)) of the pre-filtered and squared offset quadrature-phase-modulated received signal ($q_{OQPSK}$'(t)) is conjugated (S60; S140) at the positive symbol frequency ($f_s$) and then multiplied (S70; S170) by the Fourier transform ($Q_{OQPSK}$'($-f_s$)) of the pre-filtered and squared offset quadrature-phase-modulated received signal ($q_{OQPSK}$'(t)) at the negative symbol frequency ($-f_s$).

6. Method for clock-pulse synchronisation according to any one of claims 1 to 5,
   **characterised in that**
   the averaging filtering (S40, S80; S160, S180) consists of a first averaging filtering (S40; S160) and a second averaging filtering (S80;S180).

7. Method for clock-pulse synchronisation according to claim 6,
   **characterised in that**
   the bandwidth of the first averaging filtering (S40; S160) is increased until the spectral line of the pre-filtered and squared offset quadrature-phase-modulated received signal ($q_{OQPSK}$'(t)) displaced respectively by the frequency offset ($2 \cdot \Delta f$) of the carrier frequency relative to the positive and negative symbol frequency ($\pm f_s$) comes to be disposed within the pass range of the first averaging filtering (S40; S160).

8. Method for clock-pulse synchronisation according to claim 6 or 7,
   **characterised in that**
   the first averaging filtering (S40) is implemented before the determination of the two Fourier transforms (S50).

9. Method for clock-pulse synchronisation according to claim 6 or 7,
**characterised in that**
the first averaging filtering (S160) is implemented respectively after the determination of the two Fourier transforms (S150).

10. Method for clock-pulse synchronisation according to any one of claims 6 to 9,
**characterised in that**
the duration of the impulse response of the second averaging filtering (S80;S180) is increased until the duration of the impulse response of the first averaging filtering (S40; S160), reduced by the increased bandwidth, in combination with the duration of the impulse response of the second averaging filtering (S80; S180) leads to a total duration required in order to smooth interference superposed on the pre-filtered and squared offset quadrature-phase-modulated received signal ($q_{OQPSK}$'(t)).

11. Method for clock-pulse synchronisation according to any one of claims 6 to 10,
**characterised in that**
the second averaging filtering (S80; S180) is implemented after the multiplication (S70;S17O) of the conjugated Fourier transform ($Q_{OQPSK}$'*($f_s$)) at the positive symbol frequency ($f_s$) by the Fourier transform ($Q_{OQPSK}$'($-f_s$)) at the negative symbol frequency ($-f_s$).

12. Device for clock-pulse synchronisation between an amplitude-modulated or phase-modulated received signal (r(t)) and a transmitted signal (s(t)) by estimating the timing offset ($\varepsilon$) between the received signal (r(t)) and the transmitted signal (s(t)) by means of a maximum-likelihood estimator, wherein the maximum-likelihood estimator consists of a pre-filter (8, 10) dependent upon the transmission characteristic, a subsequent nonlinear signal-processing unit (16) and an averaging filter (17, 17A, 17B, 18),
**characterised in that**
the received signal (r(t)) is an offset quadrature-phase-modulated received signal, and the nonlinear signal-processing unit (16) is a squarer without modulus former (16).

13. Device for clock-pulse synchronisation according to claim 12,
**characterised in that**
the averaging filter (17, 17A, 17B, 18) consists of a first averaging filter (17, 17A, 17B) and a second averaging filter (18) connected downstream.

14. Device for clock-pulse synchronisation according to claim 13,
**characterised in that**
a first and a second discrete Fourier transformer (19, 20) for the implementation of the Fourier transformation at the positive and negative symbol frequency ($+f_s$, $-f_s$) are connected respectively between the squarer (16) and the second averaging filter (18).

15. Device for clock-pulse synchronisation according to claim 14,
**characterised in that** a conjugator (21) is connected upstream or downstream of the first discrete Fourier transformer (19) for the implementation of the Fourier transformation at the positive symbol frequency ($+f_s$).

16. Device for clock-pulse synchronisation according to claim 14 or 15,
**characterised in that**
the first averaging filter is connected upstream of the first and second discrete Fourier transformers (19, 21).

17. Device for clock-pulse synchronisation according to claim 14 or 15,
**characterised in that**
a first averaging filter (17A, 17B) is connected respectively downstream of the first and second discrete Fourier transformer (19, 20).

18. Device for clock-pulse synchronisation according to claim 16 or 17,
**characterised in that**
a multiplier (22) is connected downstream of the first and second discrete Fourier transformer (19, 20) or the two first averaging filters (17A, 17B) for the multiplication of the conjugated Fourier transform ($Q_{OQPSK}$'*($f_s$)) of the pre-filtered and squared offset quadrature-phase-modulated received signal ($q_{OQPSK}$'(t)) at the positive symbol frequency ($+f_s$) by the Fourier transform ($Q_{OQPSK}$'($-f_s$)) of the pre-filtered and squared offset quadrature-phase-modulated received signal ($q_{OQPSK}$'(t)) at the negative symbol frequency (-$f_s$).

19. Digital storage medium with electronically-readable control signals, which can cooperate with a programmable computer or digital signal processor in such a manner that the method according to any one of claims 1 to 11 is implemented.

20. Computer software product with program-code means stored on a machine-readable medium in order to implement all stages according to any one of claims 1 to 11, when the software is run on a computer or a digital signal processor.

21. Computer software with program-code means in order to implement all of the stages according to any one of claims 1 to 11, when the software is run on a computer or a digital signal processor.

22. Computer software with program-code means in order to implement all of the stages according to any one of claims 1 to 11, when the software is stored on a machine-readable data medium.

**Revendications**

1. Procédé de synchronisation d'horloge entre un signal de réception modulé en amplitude ou en phase (r(t)) et un signal d'émission (s(t)) au moyen d'une évaluation du décalage de synchronisation ($\varepsilon$) entre le signal de réception (r(t)) et le signal d'émission (s(t)) par une évaluation de probabilité maximale, dans lequel l'évaluation de probabilité maximale est réalisée par un préfiltrage (S10 ; S110) dépendant de la caractéristique de transmission, une fonction non linéaire de traitement de signaux suivante (S30, S130) et un filtrage intégrateur (S40, S80; S160, S180),
   **caractérisé en ce**
   **que** le signal de réception (r(t)) est un signal de réception modulé décalé en quadrature de phase et la fonction non linéaire de traitement du signal (S30, S 130) maintient les composantes alternatives dans le spectre du signal de réception préfiltré modulé décalé en quadrature de phase (v(t)).

2. Procédé de synchronisation d'horloge selon la revendication 1,
   **caractérisé en ce**
   **que** la fonction non linéaire de traitement du signal (S30, S130) est une transformation en ondes carrées sans génération de somme (S30, S130).

3. Procédé de synchronisation d'horloge selon la revendication 2,
   **caractérisé en ce**
   **que** la transformation en ondes carrées sans génération de somme (S30, S 130) réalise une superposition de la partie réelle et imaginaire transformée en ondes carrées du signal de réception préfiltré modulé décalé en quadrature de phase (v(t)), superposition qui maintient la composante alternative dans le spectre du signal de réception modulé décalé en quadrature de phase (v(t)) préfiltré.

4. Procédé de synchronisation d'horloge selon l'une quelconque des revendications 1 à 3,
   **caractérisé en ce**
   **que** respectivement une transformée de Fourier ($Q_{OQPSK}$'(f)) du signal de réception modulé décalé en quadrature de phase ($q_{OQPSK}$'(t)) préfiltré et transformé en ondes carrées est déterminée (S50 ; S150) à la fréquence de symbole positive et négative ($\pm f_s$).

5. Procédé de synchronisation d'horloge selon la revendication 4,
   **caractérisé en ce**
   **que** la transformée de Fourier ($Q_{OQPSK}$'(($f_s$)) du signal de réception modulé décalé en quadrature de phase ($q_{OQPSK}$'(t)) préfiltré et transformé en ondes carrées est conjuguée (S60; S140) à la fréquence de symbole positive ($f_s$), puis est multiplié (S70; S170) par la transformée de Fourier ($Q_{OQPSK}$'(-$f_s$)) du signal de réception modulé décalé en quadrature de phase ($q_{OQPSK}$'(t)) préfiltré et transformé en ondes carrées à la fréquence de symbole négative (-$f_s$).

6. Procédé de synchronisation d'horloge selon l'une quelconque des revendications 1 à 5,
   **caractérisé en ce**
   **que** le filtrage intégrateur (S40, S80 ; S160, S180) est composé d'un premier filtrage intégrateur (S40 ; S160) et d'un second filtrage intégrateur (S80 ; S180).

**7.** Procédé de synchronisation d'horloge selon la revendication 6,
**caractérisé en ce**
**que** la bande passante du premier filtrage intégrateur (S40 ; S160) est augmentée jusqu'à ce que la raie spectrale du signal de réception modulé décalé en quadrature de phase ($q_{OQPSK}$'(t)) préfiltré et transformé en ondes carrées, déplacée par rapport à la fréquence de symbole positive et négative ($\pm f_s$) respectivement à hauteur du décalage de fréquence (2.$\Delta$f) de la fréquence porteuse, vienne à être comprise dans la largeur de bande du premier filtrage intégrateur (S40 ; S160).

**8.** Procédé de synchronisation d'horloge selon la revendication 6 ou 7,
**caractérisé en ce**
**que** le premier filtrage intégrateur (S40) est réalisé avant la détermination des deux transformées de Fourier (S50).

**9.** Procédé de synchronisation d'horloge selon la revendication 6 ou 7,
**caractérisé en ce**
**que** le premier filtrage intégrateur (S 160) est réalisé respectivement après la détermination des deux transformées de Fourier (S 150).

**10.** Procédé de synchronisation d'horloge selon l'une quelconque des revendications 6 à 9,
**caractérisé en ce**
**que** la durée de la réponse impulsionnelle du second filtrage intégrateur (S80 ; S180) est augmentée jusqu'à ce que la durée de la réponse impulsionnelle du premier filtrage intégrateur (S40; S 160) réduite par l'augmentation de la bande passante, en combinaison avec la durée de la réponse impulsionnelle du second filtrage intégrateur (80 ; S 180), donne une durée totale nécessaire au lissage des parasites interférant avec le signal de réception modulé décalé en quadrature de phase ($q_{OQPSK}$'(t)) préfiltré et transformé en ondes carrées.

**11.** Procédé de synchronisation d'horloge selon l'une quelconque des revendications 6 à 10,
**caractérisé en ce**
**que** le second filtrage intégrateur (S80 ; S180) est réalisé après multiplication (S70 ; S 170) de la transformée de Fourier conjuguée ($Q_{OQPSK}$'*($f_s$) à la fréquence de symbole positive ($f_s$) par la transformée de Fourier ($Q_{OQPSK}$'(-$f_s$)) à la fréquence de symbole négative (-$f_s$).

**12.** Dispositif de synchronisation d'horloge entre un signal de réception modulé en amplitude ou en phase (r(t)) et un signal d'émission (s(t)) par évaluation du décalage de synchronisation ($\varepsilon$) entre le signal de réception (r(t)) et le signal d'émission (s(t)) au moyen d'un évaluateur de probabilité maximale, dans lequel l'évaluateur de probabilité maximale est composé d'un préfiltre fonction de la caractéristique de transmission (8, 10), d'une unité de traitement de signaux non linéaire qui suit (16) et d'un filtre intégrateur (17, 17A, 17B, 18),
**caractérisé en ce**
**que** le signal de réception (r(t)) est un signal de réception modulé décalé en quadrature de phase et en ce que l'unité de traitement de signaux non linéaire (16) est un circuit de transformation en ondes carrées sans générateur de somme (16).

**13.** Dispositif de synchronisation d'horloge selon la revendication 12,
**caractérisé en ce**
**que** le filtre intégrateur (17, 17A, 17B, 18) est composé d'un premier filtre intégrateur (17, 17A, 17B) et d'un second filtre intégrateur (18) placé après.

**14.** Dispositif de synchronisation d'horloge selon la revendication 13,
**caractérisé en ce**
**qu'**entre le circuit de transformation en ondes carrées (16) et le second filtre intégrateur (18) sont placés respectivement un premier et un second module de transformée de Fourier discrète (19, 20) destinés à réaliser la transformation de Fourier à la fréquence de symbole positive et négative (+$f_s$, -$f_s$).

**15.** Dispositif de synchronisation d'horloge selon la revendication 14,
**caractérisé en ce**
**qu'**un conjugueur (21) est placé avant ou après le premier module de transformée de Fourier discrète (19) pour réaliser la transformation de Fourier à la fréquence de symbole positive (+$f_s$).

**16.** Dispositif de synchronisation d'horloge selon la revendication 14 ou 15,

**caractérisé en ce**
**que** le premier filtre intégrateur (17) est placé avant le premier et le second module de transformée de Fourier discrète (19, 21).

**17.** Dispositif de synchronisation d'horloge selon la revendication 14 ou 15,
**caractérisé en ce**
**que** respectivement un premier filtre intégrateur (17A, 17B) est placé après les premier et second module de transformée de Fourier discrète (19, 20).

**18.** Dispositif de synchronisation d'horloge selon la revendication 16 ou 17,
**caractérisé en ce qu'**un multiplicateur (22) est placé après les premier et second module de transformée de Fourier discrète (19, 20) ou les deux premiers filtres intégrateurs (17A, 17B) pour la multiplication de la transformée de Fourier conjuguée ($Q_{OQPSK}$'*($f_s$)) du signal de réception modulé décalé en quadrature de phase ($q_{OQPSK}$'(t)) préfiltré et transformé en ondes carrées à la fréquence de symbole positive (+$f_s$) par la transformée de Fourier ($Q_{OQPSK}$'(-$f_s$)) du signal de réception modulé décalé en quadrature de phase ($q_{OQPSK}$'(t)) préfiltré et transformé en ondes carrées à la fréquence de symbole négative (-$f_s$).

**19.** Support de mémoire numérique avec signaux de commande lisibles de manière électronique, qui peuvent coopérer avec un ordinateur programmable ou un processeur de signaux numérique de telle sorte que le procédé est exécuté selon l'une quelconque des revendications 1 à 11.

**20.** Produit de programme d'ordinateur avec des moyens de code de programme enregistrés sur un support lisible par un ordinateur afin de pouvoir réaliser toutes les étapes selon l'une quelconque des revendications 1 à 11 lorsque le programme est exécuté sur un ordinateur ou un processeur de signaux numérique.

**21.** Programme d'ordinateur avec des moyens de code de programme pour pouvoir réaliser toutes les étapes selon l'une quelconque des revendications 1 à 11 lorsque le programme est exécuté sur un ordinateur ou un processeur de signaux numérique.

**22.** Programme d'ordinateur avec des moyens de code de programme pour pouvoir réaliser toutes les étapes selon l'une quelconque des revendications 1 à 11 lorsque le programme est enregistré sur un support de données lisible par un ordinateur.

Fig. 1

Fig. 2

Fig. 3

Fig. 4A

Fig. 4B

Fig. 4C

Fig. 4D

Fig. 5

Fig. 7

Start

S10 — signalangepaßte Vorfilterung
des Empfangssignals r(t)

S20 — Überabtastung des gefilterten
Empfangssignals e(t)

S30 — Quadrierung des abgetasteten und
vorgefilterten Empfangssignals v(t)

S40 — erste Mittelung des abgetasteten,
gefilterten und quadrierten
Empfangssignals $q_{OQPSK}{}'(t)$

S50 — Bestimmung der diskreten Fouriertransformierten
des abgetasteten, gefilterten, quadrierten und
gemittelten Empfangssignals $q_{OQPSK}{}'(t)$ bei
den Frequenzen $\pm f_S$

S60 — Konjugierung der Fouriertransformierten
bei der Frequenz $f_S$

S70 — Multiplikation der Fouriertransformierten
bei $-f_S$ mit der Konjugierten Fouriertransformierten bei $f_S$

S80 — zweite Mittelung

S90 — Argumentbildung und Normierung
mit Faktor $\frac{1}{4\pi}$

Ende

Fig. 6

Start

S110 — signalangepaßte Vorfilterung des Empfangssignals r(t)

S120 — Überabtastung des gefilterten Empfangssignals e(t)

S130 — Quadrierung des abgetasteten und vorgefilterten Empfangssignals v(t)

S140 — Konjugierung der gefilterten, abgetasteten und quadrierten Empfangssignals $q_{OQPSK}'(t)$

S150 — Bestimmung der diskreten Fouriertransformierten des abgetasteten, gefilterten und quadrierten Empfangssignals $q_{OQPSK}'(t)$ bei der Frequenz $-f_s$ und bei der Frequenz $+f_s$ nach Konjugierung

S160 — erste Mittelung der beiden Fouriertransformierten bei den Frequenzen $\pm f_s$

S170 — Multiplikation der beiden gemittelten Fouriertransformierten bei den Frequenzen $\pm f_s$

S180 — zweite Mittelung

S190 — Argumentbildung und Normierung mit Faktor $\frac{1}{4\pi}$

Ende

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4338579 A, Rhodes

**In der Beschreibung aufgeführte Nicht-Patentliteratur**

- **K.SCHMIDT.** Digitale Taktrückgewinnung für band-breiteneffiziente Mobilfunksysteme. 1994